(19) **Europäisches Patentamt**
**European Patent Office**
**Office européen des brevets**

(11) Veröffentlichungsnummer: **0 315 731 B1**

(12) # EUROPÄISCHE PATENTSCHRIFT

(45) Veröffentlichungstag der Patentschrift:
**15.05.91 Patentblatt 91/20**

(51) Int. Cl.$^5$: **B60D 1/02**

(21) Anmeldenummer: **88109219.1**

(22) Anmeldetag: **09.06.88**

(54) Anhängerkupplung.

(30) Priorität: **11.11.87 DE 3738351**

(43) Veröffentlichungstag der Anmeldung:
**17.05.89 Patentblatt 89/20**

(45) Bekanntmachung des Hinweises auf die
Patenterteilung:
**15.05.91 Patentblatt 91/20**

(84) Benannte Vertragsstaaten:
**AT BE CH DE ES FR GB IT LI NL SE**

(56) Entgegenhaltungen:
**DE-A- 3 016 247**
**DE-A- 3 226 360**
**DE-A- 3 345 474**

(73) Patentinhaber: **ROCKINGER Spezialfabrik für
Anhängerkupplungen GmbH & Co.
Waldmeisterstrasse 80 Postfach 45 04 64
W-8000 München 45 (DE)**

(72) Erfinder: **Glässner, Ralf, Dipl.-Ing.
Schweidnitzer Strasse 41
W-8000 München 50 (DE)**
Erfinder: **Baumgartner, Richard
Lichtenweg 15
W-8254 Isen (DE)**

(74) Vertreter: **Weickmann, Heinrich, Dipl.-Ing. et
al
Patentanwälte H. Weickmann, Dr. K. Fincke
F.A. Weickmann, B. Huber Dr. H. Liska, Dr. J.
Prechtel Möhlstrasse 22 Postfach 860 820
W-8000 München 86 (DE)**

EP 0 315 731 B1

**Beschreibung**

Die Erfindung betrifft eine Anhängerkupplung umfassend

a) einen Kupplungskörper ;

b) einen Kupplungsbolzen, welcher in dem Kupplungskörper verschiebbar geführt ist zwischen einer Kupplungsstellung mit Durchgriff durch eine Zugöse und einer das Ein- und Ausfahren der Zugöse in den Kupplungskörper bzw. aus dem Kupplungskörper gestattenden Nicht-Kupplungsstellung ;

c) einen an dem Kupplungskörper schwenkbar gelagerten Aufwerfhebel, welcher durch erste Federmittel in Richtung auf eine Sicherungsstellung gespannt ist, in welcher er den Kupplungsbolzen in seiner Kupplungsstellung sichert, und entgegen der Wirkung der ersten Federmittel unter Mitnahme des Kupplungsbolzens in dessen Nicht-Kupplungsstellung, in eine Haltestellung verschwenkbar und in dieser feststellbar ist, in welcher er den Kupplungsbolzen in der Nicht-Kupplungsstellung hält ;

d) von außen betätigbare Betätigungsmittel zum Überführen des Aufwerfhebels von der Sicherungsstellung in die Haltestellung und von der Haltestellung in die Sicherungsstellung ;

e) einen an dem Kupplungskörper schwenkbar gelagerten Auslösehebel, welcher sich bei eingefahrener Zugöse in einem Betriebsstellungsbereich befindet, in Richtung auf eine Lösebereitschaftsstellung vorgespannt ist und beim Ausfahren der Zugöse aus dem Kupplungskörper in die Lösebereitschaftsstellung übergeht;

f) Verbindungsmittel zwischen dem Lösehebel und dem Aufwerfhebel, welche

zum ersten bei eingefahrener Zugöse den Übergang des Aufwerfhebels aus seiner Sicherungsstellung in seine Haltestellung unter Verbleib des Auslösehebels in seinem Betriebsstellungsbereich gestatten,

zum zweiten beim Ausfahren der Zugöse den Übergang des Auslösehebels aus seinem Betriebsstellungsbereich in seine Lösebereitschaftsstellung gestatten unter Verbleib des Aufwerfhebels in seiner Haltestellung und

zum dritten beim Überführen des Auslösehebels aus seiner Lösebereitschaftsstellung in seinen Betriebsstellungsbereich durch die einfahrende Zugöse eine Freigabe des Aufwerfhebels aus seiner Haltestellung bewirken.

Eine solche Anhängerkupplung ist aus der DE-A 33 45 474 bekannt.

Bei dieser bekannten Anhängerkupplung umfassen die Verbindungsmittel zwischen dem Lösehebel und dem Aufwerfhebel einen Abstützhebel. Der Abstützhebel ist um eine Abstützhebelschwenkachse schwenkbar, die zu der Aufwerfhebelschwenkachse parallel versetzt ist. Der Auslösehebel ist gegenüber der Abstützhebelschwenkachse neben seiner Schwenkbewegung auch einer Verschiebebewegung fähig, wobei der Auslösehebel beim Ausfahren und beim Einfahren unterschiedliche Betriebsstellungsfolgen durchläuft, die durch Überlagerung von Schwenk- und Verschiebebewegungen zustande kommen.

Die bekannte Anhängerkupplung hat sich in der Herstellungspraxis und vor allem im Einsatz hervorragend bewährt. Gleichwohl wird versucht, und hierin ist die Aufgabe der vorliegenden Erfindung zu sehen, den mechanischen Aufbau der bekannten Anhängerkupplung noch zu vereinfachen.

Zur Lösung dieser Aufgabe wird vorgeschlagen, daß zwischen zwei relativ zueinander um eine gemeinsame Drehteilachse drehbaren und quer zu dieser Drehteilachse unbeweglichen Drehteilen der Verbindungsmittel eine Freilaufmitnahmevorrichtung vorgesehen ist, welche eine Relativdrehung der beiden Drehteile in einem ersten Relativdrehsinn sperrt und eine Relativdrehung der beiden Drehteile in einem zweiten Relativdrehsinn freigibt und daß der Freilaufmitnahmevorrichtung eine kupplungszustandsabhängig gesteuerte Sperrungsunterdrückungsvorrichtung zugeordnet ist, welche kupplungszustandsabhängig die Sperrung zwischen den beiden Drehteilen auch bei Relativdrehung im ersten Relativdrehsinn unterdrückt,

wobei bei in Haltestellung befindlichem Aufwerfhebel während des Übergangs des Auslösehebels aus dem Betriebsstellungsbereich in die Auslösebereitschaftsstellung die Relativdrehung der beiden Drehteile im zweiten Relativdrehsinn erfolgt und daher freigegeben ist,

wobei weiter bei in Haltestellung befindlichem Aufwerfhebel während des Übergangs des Auslösehebels aus der Lösebereitschaftsstellung in den Betriebsstellungsbereich die Relativdrehung der beiden Drehteile im ersten Drehsinn erfolgen müßte und daher mindestens zum Teil gesperrt wird und

wobei bei im Betriebsstellungsbereich befindlichem Auslösehebel während des Übergangs des Aufwerfhebels aus der Sicherungsstellung in die Haltestellung die Sperrungsunterdrückungsvorrichtung die Sperrung der Relativdrehung der beiden Drehteile im ersten Relativdrehsinn aufhebt.

Die angestrebte konstruktive Vereinfachung ergibt sich beim Anmeldungsgegenstand dadurch, daß keiner der Drehteile mehr eine Querbewegung auszuführen hat, so daß sich insgesamt ein vereinfachter und leicht zu steuernder Bewegungsablauf ergibt. Die Freilaufmitnahmevorrichtung kann auf verschiedenste, in jedem Fall einfache Weise ausgebildet werden ; auch für die Sperrungsunterdrückungsvorrichtung stehen einfache Konstruktionen zur Verfügung, wie sich aus den Unteransprüchen und den Ausführungsbeispielen im Einzelnen ergibt.

Nach einer ersten Ausführungsform der Freilaufmitnahmevorrichtung ist vorgesehen, daß einer der beiden Drehteile eine gerastete Umfangsfläche mit mindestens einer Sperrast aufweist und daß an dem anderen der beiden Drehteile eine Sperrklinke zum Eingriff in diese Sperrast gelagert und in Richtung auf Eingriff in die Sperrast vorgespannt ist. Dabei kann die Sperrklinke an dem jeweils anderen der beiden Drehteile schwenkbar gelagert sein, wie dies bei sogenannten Sperrklinkenfreiläufen üblich ist.

Nach einer anderen Ausführungsform der Freilaufmitnahmevorrichtung ist vorgesehen, daß an einem der beiden Drehteile eine in Richtung der Drehteilachse im wesentlichen axial gerichtete, gerastete Stirnfläche mit mindestens einer Sperrast vorgesehen ist und daß an dem anderen der beiden Drehteile mindestens ein Rastvorsprung angebracht ist, welcher in Richtung auf Eingriff in die Sperrast vorgespannt ist. Auch bei dieser Ausführungsform könnte der Rastvorsprung an dem jeweils anderen der beiden Drehteile,nach Art einer schwenkbar oder verschiebbar gelagerten Sperrklinke,beweglich angebracht sein. Eine besonders einfache und robuste Ausführungsform ergibt sich jedoch dadurch, daß der Rastvorsprung an dem anderen der beiden Drehteile starr angebracht ist und daß die beiden Drehteile in Achsrichtung der Drehteilachse gegeneinander relativ verschiebbar und gegen einander vorgespannt sind.

Die erfindungsgemäße Konstruktion läßt sich bei Kupplungsbauarten anwenden, bei denen der Aufwerfhebel auf einer Betätigungswelle im wesentlichen drehfest angeordnet ist und der Auslösehebel auf dieser Betätigungswelle drehbar gelagert ist. In diesem Fall definiert die Betätigungswelle die Drehteilachse und die Freilaufmitnahmevorrichtung wird zwischen der Betätigungswelle oder dem Aufwerfhebel einerseits und dem Auslösehebel andererseits angeordnet, insbesondere zwischen je einer Nabe des Aufwerfhebels und des Auslösehebels. Es ist also mit der erfindungsgemäßen Lösung eine Kupplungsbauart möglich, bei der unter Verzicht auf einen besonderen Abstützhebel der Aufwerfhebel und der Auslösehebel gemeinsam auf der Betätigungswelle des Aufwerfhebels angeordnet sind. Dabei kann die Sperrungsunterdrückungsvorrichtung entweder in Abhängigkeit von der Stellung des Aufwerfhebels, oder in Abhängigkeit von der Stellung der Betätigungswelle, oder in Abhängigkeit von der Stellung des Auslösehebels gesteuert sein, oder aber in Abhängigkeit von der Kraftbeaufschlagung der Betätigungsmittel im Sinne der Überführung des Aufwerfhebels von der Sicherungsstellung in die Haltestellung. Man nennt eine solche Kupplung "Ein-Wellen-Kupplung".

Es sei in diesem Zusammenhang erwähnt, daß bei den Kupplungsbauarten, bei denen Aufwerfhebel und Auslösehebel mit gemeinsamer Achse ausgeführt sind, der Aufwerfhebel und der Kupplungsbolzen mit je einer Halterastfläche ausgeführt werden können, welche in der Haltestellung ineinander einrasten.

Der Erfindungsgedanke ist aber auch dann realisierbar, wenn auf einer Betätigungswelle ein Abstützhebel im wesentlichen unverdrehbar angeordnet ist und der Auslösehebel auf dieser Betätigungswelle drehbar gelagert ist und wenn der Aufwerfhebel um eine zu der Betätigungswelle parallele Achse drehbar gelagert ist, so daß der Abstützhebel mit einer Mitnahme- und Abstützspitze über eine Mitnahmekante des Aufwerfhebels gleitet, wenn dieser aus der Sicherungsstellung in die Haltestellung überführt werden soll und in eine Stützrast des Aufwerfhebels einrastet. Bei Anwendung des Erfindungsvorschlags auf eine solche Ausführungsform ist die Drehteilachse durch die Achse der Betätigungswelle definiert und die Freilaufmitnahmevorrichtung zwischen dem Abstützhebel oder der Betätigungswelle einerseits und dem Auslösehebel andererseits vorgesehen, insbesondere zwischen einer Nabe des Abstützhebels einerseits und einer Nabe des Auslösehebels andererseits. Die Erfindung ist also mit anderen Worten auch und insbesondere bei sogenannten "Zwei-Wellen-Kupplungen" anwendbar. Dabei kann die Sperrungsunterdrückungsvorrichtung in Abhängigkeit von der Stellung des Aufwerfhebels oder in Abhängigkeit von der Stellung des Abstützhebels oder in Abhängigkeit von der Stellung der Betätigungswelle oder in Abhängigkeit von der Stellung des Auslösehebels gesteuert sein, oder aber in Abhängigkeit von der Kraftbeaufschlagung der Betätigungsmittel im Sinne der Überführung des Aufwerfhebels von der Sicherungsstellung in die Haltestellung.

Auch für die Ausbildung der Sperrungsunterdrückungsvorrichtung kommen verschiedene einfache Lösungen in Frage.

So kann ein die Sperrungsunterdrückungsvorrichtung steuernder, um die Drehteilachse, oder eine dazu parallele Achse, drehbarer Kupplungsteil einen Sperrungsunterdrückungsnocken tragen.

Nach einer anderen Ausführungsform kann ein die Sperrungsunterdrückungsvorrichtung steuernder, um die Drehteilachse oder eine dazu parallele Achse, drehbarer Kupplungsteil, einen im wesentlichen parallel zur Drehteilachse verschiebbaren Sperrungsunterdrückungsschieber tragen, welcher mit einer am Kupplungskörper angeordneten Nockenbahn in Eingriff steht. Dabei erfährt dieser Sperrungsunterdrückungsschieber eine Verschiebung, die zur Einwirkung auf die Freilaufmitnahmevorrichtung gebracht werden kann.

Eine weitere Alternative für die Sperrungsunterdrückungsvorrichtung liegt darin, daß ein um die Drehteilachse, oder eine dazu parallele Achse drehbarer Kupplungsteil in Richtung der jeweiligen Achse beweglich ist und im Zuge einer Drehbewegung um seine jeweilige Achse durch Eingriff mit einer am Kupplungskörper angeordneten Führungskante in Richtung der jeweiligen Achse verschiebbar ist. Durch diese axiale Verschiebbarkeit kann dann wieder die Freilaufmitnahmevorrichtung wirksam bzw. unwirksam gemacht werden.

Die zuletzt genannte Alternative läßt sich in besonders einfacher Weise dadurch realisieren, daß der Auslösehebel eine Bohrung eines Schenkels des gabelförmig ausgebildeten Kupplungskörpers mit Drehspiel durchdringt und daß der Rand dieser Bohrung als Führungskante ausgebildet ist. Dabei ist es im Hinblick auf möglichst raumsparende Bauweise einerseits und dennoch kräftige Ausbildung des Auslösehebels andererseits von Vorteil, wenn der Querschnitt des Auslösehebels an der Stelle des Durchtritts durch die Bohrung länglich und gegen einer zu seiner Drehachse normale Ebene verschränkt ist.

Eine weitere Alternative für die Sperrungsunterdürckungsvorrichtung sieht vor, daß der die Sperrast aufnehmende Drehteil von zwei relativ zueinander winkelbeweglichen Drehteilelementen gebildet ist, deren jedes einen Sperrastabschnitt aufweist, wobei diese Sperrastabschnitte in einer ersten Relativwinkellage der beiden Drehteilelemente aneinander anschließen derart, daß sie einer ihnen gemeinsamen Sperrklinke bzw. einem ihnen gemeinsamen Sperrvorsprung an dem jeweils anderen Drehteil Eintritt gewähren und in einer zweiten Relativwinkellage der beiden Drehteilelemente gegeneinander versetzt sind derart, daß die ihnen gemeinsame Sperrklinke bzw. der Sperrvorsprung in keinen der Sperrastabschnitte eintreten kann. Dabei kann der Aufbau etwa so getroffen sein, daß das eine der Drehteilelemente auf einer den Betätigungsmitteln zugehörigen Betätigungswelle unverdrehbar und das andere der beiden Drehteilelemente auf der Betätigungswelle beschränkt winkelbeweglich angeordnet ist, daß zwischen den beiden Drehteilelementen eine Spielbeseitigungsfederung angeordnet ist, welche die beiden Drehteilelemente in die erste Relativwinkellage zu drehen sucht, und daß das andere der beiden Drehteilelemente der gegenüber der Wirkung der Spielbeseitigungsfederung stärkeren Wirkung der ersten Federungsmittel unterworfen ist derart, daß bei einer Drehmomentbeaufschlagung der Betätigungswelle im Sinne der Überführung des Aufwerfhebels von der Sicherungsstellung in die Haltestellung die beiden Drehteilelemente in die zweite Relativwinkellage treten.

Wiederum aus Gründen platzsparender Bauweise empfiehlt es sich, daß die beiden relativ zueinander drehbaren Drehteile je einen radialen Fortsatz aufweisen, von denen mindestens einer in einer die Drehteilachse enthaltenden Ebene derart gekröpft ist, daß die beiden Fortsätze annähernd in einer gemeinsamen, zur Drehteilachse normalen Ebene liegen. Der Begriff der radialen Fortsätze steht hier für den Fall einer Ein-Wellen-Kupplung für Aufwerfhebel und Auslösehebel und für den Fall einer Zwei-Wellen-Kupplung für Abstützhebel und Auslösehebel.

Wenn die Freilaufmitnahmevorrichtung von einer Sperrast in einer Stirnfläche des einen der beiden Drehteile und einem Sperrvorsprung in einer gegenüberliegenden Stirnfläche des anderen der beiden Drehteile gebildet ist und einer der beiden Drehteile axial gegenüber dem anderen verschiebbar ist, und wenn der verschiebbare Drehteil gleichzeitig Träger des Auslösehebels ist, so kann bei einem gegen die Längsachse des Fahrzeugs schrägen Einfahren der Kupplungsöse in das Kupplungsmaul auf den axial verschiebbaren Drehteil eine Kraftwirkung längs der Drehteilachse zustandekommen, welche das Ineinandergreifen von Sperrast und Sperrvorsprung verhindern oder aufheben könnte. Um dem vorzubeugen, wird vorgeschlagen, daß der Rastvorsprung und die Sperrrast mit Hinterschneidungen ausgeführt sind, welche ein unbeabsichtigtes Abheben der beiden Drehteile voneinander verhindern.

Bei der zuletzt diskutierten Alternative für die Sperrungsunterdrückungsvorrichtung, bei der ein Drehspiel zwischen zwei Drehteilelementen vorgesehen ist, kann dieses Drehspiel noch zur Erfüllung einer zusätzlichen Funktion herangezogen werden: es ist möglich, daß das zur Überführung der beiden drehteilelemente aus der ersten Relativwinkellage in die zweite Relativwinkellage vorhandene Winkelspiel einen Vorlauf der Betätigungswelle vor dem Beginn der Bewegung des Aufwerfhebels aus seiner Sicherungsstellung in Richtung seiner Haltestellung gestattet und daß dieser Vorlauf zur Ansteuerung eines Steuerungselements dient, welches bei Vorhandensein eines die Zugöse gegen den Kupplungsbolzen andrückenden Kraftgeräts die Kraftwirkung dieses Kraftgeräts aufhebt, bevor die Bewegung des Aufwerfhebels durch die Betätigungswelle eingeleitet wird.

Bei einer Bauart der erfindungsgemäßen Anhängerkupplung, bei der einer der beiden Drehteile eine gerastete Umfangsfläche mit mindestens einer Sperrast aufweist und an dem anderen der beiden Drehteile eine Sperrklinke zum Eingriff in diese Sperrrast gelagert und in Richtung auf Eingriff in die Sperrrast vorgespannt ist, läßt sich auch eine Ausgestaltung verwirklichen derart, daß um die gemeinsame Drehteilachse ein Sperrungsunterdrückungselement drehbar gelagert ist, daß dieses Sperrungsunterdrückungselement in Richtung auf eine Sperrungsunterdrückungsstellung vorgespannt ist, in welcher es bei im Betriebsstellungsbereich befindlichem Auslösehebel während des Übergangs des Aufwerfhebels aus seiner Sicherungsstellung in seine Haltestellung die Sperrklinke in Aussereingriffsstellung hält, daß an dem Sperrungsunterdrückungselement eine Zusatzrast angebracht ist, in welche die Sperrklinke annähernd gleichzeitig mit dem Einfallen in die Sperrrast einfällt, wenn der Auslösehebel bei in Haltestellung befindlichem Aufwerfhebel aus seinem Betriebsstellungsbereich in seine Auslösebereitschaftsstellung übergeht, so daß bei nachfolgender Rückkehr des Auslösehebels aus der Auslösebereitschaftsstellung in den Betriebsstellungsbereich das Sperrungsunterdrückungselement entgegen seiner Vorspannung durch die Sperrklinke aus der Sperrungsunterdrückungsstellung ausgerückt wird, und daß zur Rückführung der Sperrklinke in ihre Außereingriffsstellung ein Sperrklinkenrückführnocken vorgesehen ist, welcher bei der Rückkehr des Aufwerfhebels aus der Haltestellung in die Sicherungsstellung wirksam werdend die Sperrklinke in ihre Außereingriffsstellung zurückführt, nachdem der Auslösehebel seinen Betriebsstellungsbereich erreicht hat, so daß dann das Sperrungsunterdrückungselement unter der Wirkung seiner Vorspannung wieder in seine Sperrungsunterdrückungsstellung treten kann.

Bei einer weiteren Bauart der erfindungsgemäßen Anhängerkupplung, bei der an einem der beiden Drehteile eine in Richtung der Drehteilachse im wesentlichen axial gerichtete, gerastete Stirnfläche mit mindestens einer Sperrast vorgesehen ist und an dem anderen der beiden Drehteile mindestens ein Rastvorsprung angebracht ist, welcher in Richtung auf Eingriff in die Sperrast vorgespannt ist, läßt sich auch eine Ausgestaltung verwirklichen derart, daß um die gemeinsame Drehteilachse ein Sperrungsunterdrückungselement drehbar gelagert ist, daß dieses Sperrungsunterdrückungselement in Richtung auf eine Sperrungsunterdrückungsstellung vorgespannt ist, in welcher es bei im Betriebsstellungsbereich befindlichem Auslösehebel während des Übergangs des Aufwerfhebels aus seiner Sicherungsstellung in seine Haltestellung den Rastvorsprung in Außereingriffsstellung hält, daß an dem Sperrungsunterdrückungselement eine Zusatzrast angebracht ist, in welche der Rastvorsprung annähernd gleichzeitig mit dem Einfallen in die Sperrast einfällt, wenn der Auslösehebel bei in Haltestellung befindlichem Aufwerfhebel aus seinem Betriebsstellungsbereich in seine Auslösebereitschaftsstellung übergeht, so daß bei nachfolgender Rückkehr des Auslösehebels aus der Auslösebereitschaftsstellung in den Betriebsstellungsbereich das Sperrungsunterdrückungselement entgegen seiner Vorspannung durch den Rastvorsprung aus der Sperrungsunterdrückungsstellung ausgerückt wird, und daß zur Rückführung des Rastvorsprungs in seine Außereingriffsstellung ein Rastvorsprungrückführnocken vorgesehen ist, welcher bei der Rückkehr des Aufwerfhebels aus der Haltestellung in die Sicherungsstellung wirksam werdend den Rastvorsprung in Außereingriffsstellung zurückführt, nachdem der Auslösehebel seinen Betriebsstellungsbereich erreicht hat, so daß dann das Sperrungsunterdrückungselement unter der Wirkung seiner Vorspannung wieder in seine Sperrungsunterdrückungsstellung treten kann.

Die beiliegenden Figuren erläutern die Erfindung anhand von Ausführungsbeispielen. Es stellen dar:

Fig. 1 das Schema einer erfindungsgemäß gestalteten Zwei-Wellen-Kupplung bei eingekuppelter Zugöse;

Fig. 2 die Kupplung gemäß Fig. 1 beim Auskuppeln, und zwar nach Beginn des Anhebens des Kupplungsbolzens;

Fig. 3 die Kupplung nach Fig. 1 und Fig. 2 beim Auskuppeln nach Erreichung der Nicht-Kupplungsstellung des Kupplungsbolzens;

Fig 4 die Kupplung nach den Fig. 1 bis 3 nach Ausfahren der Zugöse einer Anhängerdeichsel aus dem Kupplungskörper;

Fig 5 die Kupplung nach den Fig. 1 bis 4 nach teilweisem Wiedereinfahren der Zugöse in den Kupplungskörper;

Fig 6 das Schema einer gegenüber den Fig. 1 bis 5 abgewandelten Freilaufmitnahmevorrichtung und der zugehörigen Sperrungsunterdrückungsvorrichtung;

Fig 7 das Schema einer Freilaufmitnahmevorrichtung gemäß Fig. 6 mit einer anderen Sperrungunterdrückungsvorrichtung;

Fig 8 ein Detail zu Fig. 7;

Fig 9 das Schema einer erfindungsgemäß ausgebildeten Ein-Wellen-Kupplung;

Fig 10 das Schema einer Freilaufmitnahmevorrichtung und einer zugehörigen Sperrungsunterdrückungsvorrichtung bei der Kupplung gemäß Fig. 9;

Fig 11 den Ablauf des Zyklus "Öffnen mit eingekuppelter Zugöse und Schließen durch einfahrende Zugöse" bei einer Kupplung gemäß den Fig. 1 und 5;

Fig 12 das Schema einer der Fig. 6 entsprechenden Freilaufmitnahmevorrichtung mit einer nochmals abgewandelten Sperrungsunterdrückungsvorrichtung;

Fig 12a eine Abwandlung zu Fig. 12 mit Hinterschneidungen an der Sperrast und an dem Sperrvorsprung;

Fig 13 eine Explosionsdarstellung zu Fig. 12, wobei die Betrachtungsrichtung V sich aus der Figur 12 ergibt und wobei zwei Drehteilelemente eine erste Relativwinkellage zueinander einnehmen;

Figur 14 eine Teilansicht zu Fig. 13, wobei die beiden Drehteilelemente eine zweite Relativwinkellage zueinander einnehmen;

Figur 15 ein Kraftgerät zur Ausschaltung des Spiels zwischen dem Kupplungsbolzen und der Zugöse;

Figur 16 eine weitere Ausführungsform einer erfindungsgemäß gestalteten Zwei-Wellen-Kupplung bei eingekuppelter Zugöse;

Figur 17 die Kupplung gemäß Figur 16 beim Auskuppeln, und zwar nach Beginn des Anhebens des Kupplungsbolzens;

Figur 18 die Kupplung nach Figuren 16 und 17 beim Auskuppeln nach Erreichen der Nichtkupplungsstellung des Kupplungsbolzens;

Figur 19 die Kupplung nach den Figuren 16 bis 18 nach Ausfahren der Zugöse einer Anhängerdeichsel aus dem Kupplungskörper;

Figur 20 die Kupplung nach den Figuren 16 bis 19 nach teilweisem Wiedereinfahren der Zugöse in den Kupplungskörper;

Figur 21 eine Ansicht in Pfeilrichtung X der Figur 16 auf die Gelenkstellen des Aufwerfhebels des Abstützhebels, des Auslösehebels und eines Sperrungsunterdrückungselements;

Figur 22 einen Schnitt nach Linie XXII-XXII der Figur 21 und

Figur 23 eine Explosionsansicht einer weiteren Ausführungsform der Erfindung, welche im Grundprinzip der Ausführungsform nach den Figuren 16 bis 21 entspricht,wobei jedoch die radial wirkende Freilaufmitnahmevorrichtung der Figuren 16 bis 22 durch eine axial wirkende Freilaufmitnahmevorrichtung ersetzt ist.

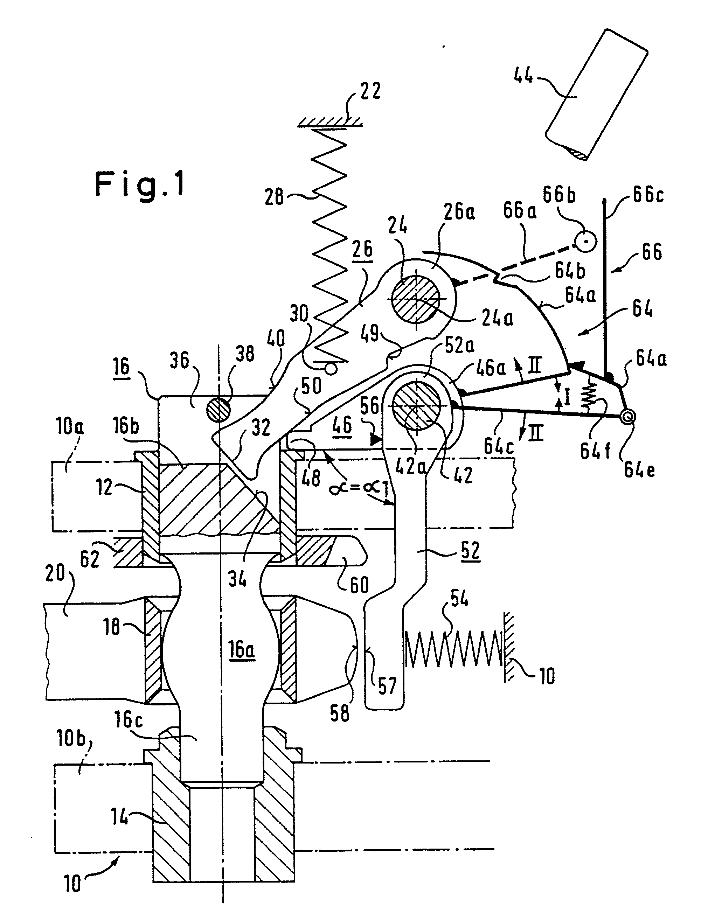

In Fig. 1 ist ein Kupplungskörper ganz allgemein mit 10 bezeichnet. Dieser Kupplungskörper ist gabelförmig ausgebildet, mit einem oberen Gabelschenkel 10a und einem unteren Gabelschenkel 10b. Die beiden Gabelschenkel 10a und 10b sind zu einem einstückigen Kupplungskörper miteinander verbunden. In dem oberen Gabelschenkel 10a ist eine obere Kupplungsbolzenführungsbuchse 12 eingepreßt, während in dem unteren Gabelschenkel 10b eine untere Kupplungsbolzenführungsbuchse 14 eingepreßt ist. In den Buchsen 12 und 14 ist ein Kupplungsbolzen 16 verschiebbar geführt, der in Fig. 1 in der eingekuppelten Stellung dargestellt ist. Der Kupplungsbolzen 16 durchgreift hierbei mit einem bombierten Teil 16a eine ringförmige Zugöse 18 einer Anhängerdeichsel 20. Der Kupplungsbolzen 16 ist mit einem oberen zylindrischen Abschnitt 16b von der Kupplungsbolzenführungsbuchse 12 aufgenommen und mit einem unteren zylindrischen Abschnitt 16c von der unteren Kupplungsbolzenführungsbuchse 14. In einem mit dem Kupplungskörper verbundenen Automatikgehäuse, welches schematisch durch die schraffierte Fläche 22 angedeutet ist, ist eine Aufwerfhebellagerwelle 24 mit einer Aufwerfhebelschwenkachse 24a gelagert. Ein Aufwerfhebel 26 ist um die Aufwerfhebelschwenkachse 24a schwenkbar. Eine Aufwerfhebelfeder 28 ist in dem Automatikgehäuse abgestützt und wirkt auf einen Angriffsbolzen 30 ein, welcher an dem Aufwerfhebel 26 angebracht ist. Der Aufwerfhebel 26 befindet sich in der Fig. 1 in einer Stellung, in welcher er mit seinem freien Ende 32 einer Abschrägung 34 des Schlitzbodens eines Schlitzes 36 in dem Kupplungsbolzen 16 gegenübersteht, so daß der Kupplungsbolzen 16 gegen Aufwärtsbewegung gesichert ist. Der Aufwerfhebel 26 wirkt mit einem Anhebebolzen 38 zusammen, welcher den Schlitz 36 ganz oder teilweise überbrückt. Man erkennt aus Fig. 1, daß der Kupplungsbolzen 16 aus der gezeichneten Kupplungsstellung angehoben werden kann, wenn der Aufwerfhebel 26 um die Aufwerfhebelschwenkachse 24a im Uhrzeigersinn verschwenkt wird und dabei die Anhebekante 40 den Anhebebolzen 38 nach oben mitnimmt.

In dem Automatikgehäuse ist ferner eine Betätigungswelle 42 drehbar gelagert, welche eine Betätigungswellenachse 42a aufweist. Die Betätigungswelle 42 ist außerhalb des Automatikgehäuses mit einem Betätigungshandgriff 44 starr verbunden, der in Fig. 1 schematisch angedeutet ist. Auf der Betätigungswelle 42 sitzt unverdrehbar ein Abstützhebel 46, welcher mit einer Mitnahme- und Abstützspitze 48 einer Mitnahmekante 50 des Aufwerfhebels 26 gegenübersteht. Man erkennt, daß durch Drehen der Betätigungswelle 42 die Mitnahme- und Abstützspitze 48 zum Eingriff mit der Mitnahmekante 50 gebracht werden kann, so daß der Abstützhebel 46 den Aufwerfhebel 26 im Uhrzeigersinn verschwenkt und damit der Kupplungsbolzen 16 angehoben wird.

Gemäß Fig. 1 liegt der Abstützhebel 46 in der Kupplungsstellung auf der Kupplungsbolzenführungsbuchse 12 auf. Diese Auflage wird durch die Anlage des Aufwerfhebels 26 an der Mitnahme- und Abstützspitze 48 erreicht, weil der Aufwerfhebel 26 durch die Feder 22 nach unten gedrückt wird.

Auf der Betätigungswelle 42 ist ein Auslösehebel 52 drehbar gelagert. Dieser Auslösehebel steht unter der Wirkung einer Auslösehebelfeder 54, welche am Kupplungskörper 10 abgestützt ist und den Auslösehebel 52 in Uhrzeigersinn zu verdrehen sucht. Der Auslösehebel 52 liegt unter der Wirkung der Auslösehebelfeder 54 an einem Anschlag 56 des Abstützhebels 46 an. Die Wirkung der Feder 28 ist stärker als die Auslösehebelfederung 54, so daß trotz der Wirkung der Auslösehebelfeder 54 der Auslösehebel 52 und der Abstützhebel 46 die in Fig. 1 gezeigte Stellung innerhalb eines Betriebsbereichs einnehmen.

Der Auslösehebel 52 ist in Fig. 1 in seiner Betriebsstellung, die er bei eingekuppelter Kupplung einnimmt. An dem Auslösehebel 52 ist eine Anlagefläche 57 angebracht, die zur Anlage an einer Anschlagfläche 58 der Zugöse 18 bestimmt ist. An mittlerer Stelle ist der Auslösehebel 52 zum Eingriff in einen Schlitz 60 bemessen. Dieser Schlitz 60 ist an einem Lagerlappen 62 eines nicht dargestellten Kupplungsmauls angebracht. Wenn der Auslösehebel 52 in den Schlitz 60 eingreift, so ist das Kupplungsmaul 62 in seiner Mittelstellung unverdrehbar festgelegt, was für den Vorgang des Einfahrens der Zugöse 18 in die Kupplung gewünscht wird.

Der Abstützhebel 46 weist eine Abstützhebelnabe 46a auf, der Auslösehebel eine Auslösehebelnabe 52a. Zwischen der Auslösehebelnabe 52a und der Abstützhebelnabe 46a ist eine Freilaufmitnahmevorrichtung 64 angeordnet. Diese Freilaufmitnahmevorrichtung 64 umfaßt eine mit der Abstützhebelnabe 46a verbundene Umfangsfläche 64a, in der eine Sperrast 64b vorgesehen ist. Ferner umfaßt die Freilaufmitnahmevorrichtung an einem mit der Auslösehebelnabe 52a drehfest verbundenen Arm 64c eine Sperrklinke 64d, welche in einem Sperrklinkenlager 64e gelagert und durch eine Sperrklinkenfeder 64f in Richtung auf Anlage an der Umfangsfläche 64a vorgespannt ist. Die Sperrklinke 64d ist zum Eingriff in die Sperrast 64b ausgebildet.

Man erkennt, daß bei einem ersten Relativdrehsinn der Naben 52a und 46a, welcher durch die Pfeile I angedeutet ist, die Freilaufmitnahmevorrichtung 64 sperrt, indem die Sperrklinke 64d in die Sperrast 64b einfällt. Man erkennt weiter, daß in einem zweiten Relativdrehsinn der Naben 52a und 46a der durch die Pfeile II angedeutet ist, die Freilaufmitnahmevorrichtung 64 unwirksam ist, indem die Sperrklinke 64d über die Sperrast 64b hinweggleiten kann.

Der Freilaufmitnahmevorrichtung 64 ist eine ganz allgemein mit 66 bezeichnete Sperrungsunterdrückungsvorrichtung zugeordnet. Diese Sperrungsunterdrückungsvorrichtung 66 umfaßt an einem Arm 66a, welcher an der Nabe 26a des Aufwerfhebels 26 befestigt ist, einen Nocken 66b. Dieser Nocken 66b ist zum Eingriff in eine Sperrklinkenausrückstange 66c bestimmt, welche mit der Sperrklinke 64d starr verbunden ist. Man erkennt, daß der Nocken 66b, wenn er zum Eingriff mit der Sperrklinkenausrückstange 66c kommt, die Sperrklinke 64d von der Umfangsfläche 64a abhebt, so daß auch bei einer Relativdrehung der Naben 52a und 46a im ersten Relativdrehsinn I, die Sperrklinke 64d über die Sperrast 64b hinweggehen kann.

In Fig. 1 ist der Kupplungsbolzen 16 durch den Aufwerfhebel 26 gesichert. Weitere Sicherungen können vorhanden sein. Der Kupplungsbolzen kann nicht nach oben gehen, weil er bei einer Aufwärtsbewegung mit der Abschrägung 34 gegen die Endfläche 32 des Aufwerfhebels 26 anstoßen würde und andererseits der Aufwerfhebel 26 in seiner in Fig. 1 dargestellten Sicherungsstellung durch die Aufwerfhebelfeder 28 gehalten ist. In der Kupplungsstellung gemäß Fig. 1 kann das die Kupplung tragende Zugfahrzeug anfahren und den über die Zugdeichsel 20 angehängten Anhänger mitnehmen.

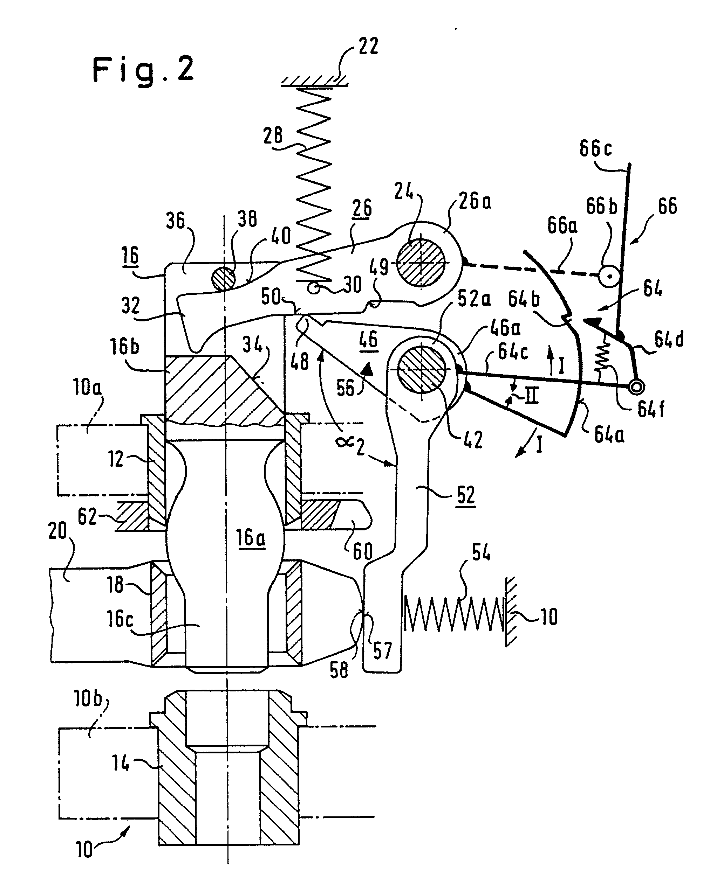

Wenn der Anhänger von dem Zugfahrzeug abgekuppelt werden soll, so wird die Betätigungswelle 42 durch den Handhebel 44 im Uhrzeigersinn verschwenkt, so daß der Abstützhebel 46 über seine Mitnahme- und Abstützspitze 48 auf die Mitnahmekante 50 des Aufwerfhebels 26 einwirkt und der Aufwerfhebel 26 entgegen der Wirkung der Aufwerfhebelfeder 28 im Uhrzeigersinn verschwenkt wird und dabei den Kupplungsbolzen 16 durch Eingriff seiner Anhebekante 40 an dem Anhebebolzen 38 mit nach oben nimmt. Der Anfang dieses Auskupplungsvorgangs ist in Fig. 2 dargestellt. Zunächst ist aber noch zu Fig. 1 nachzutragen, daß der zwischen dem Abstützhebel 46 und dem Auslösehebel 52 eingeschlossene Winkel grundsätzlich mit $\alpha$ bezeichnet ist und in Fig. 1 den Wert $\alpha_1$ hat. Eine Vergrößerung des Winkels $\alpha$ entspricht dem ersten Relativdrehsinn I und eine Verkleinerung des Winkels $\alpha$ entspricht dem zweiten Relativdrehsinn II.

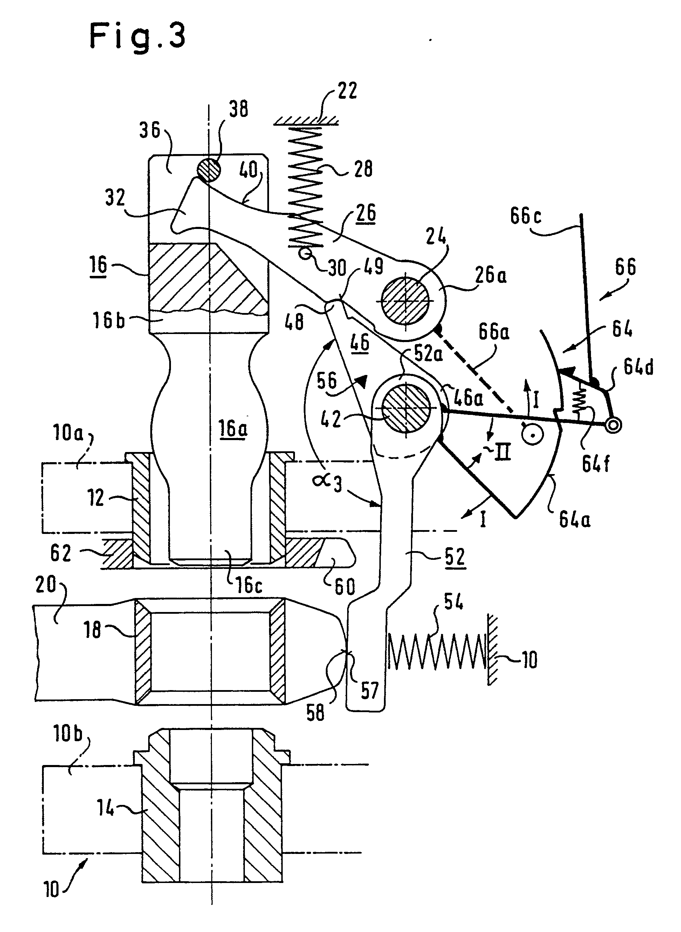

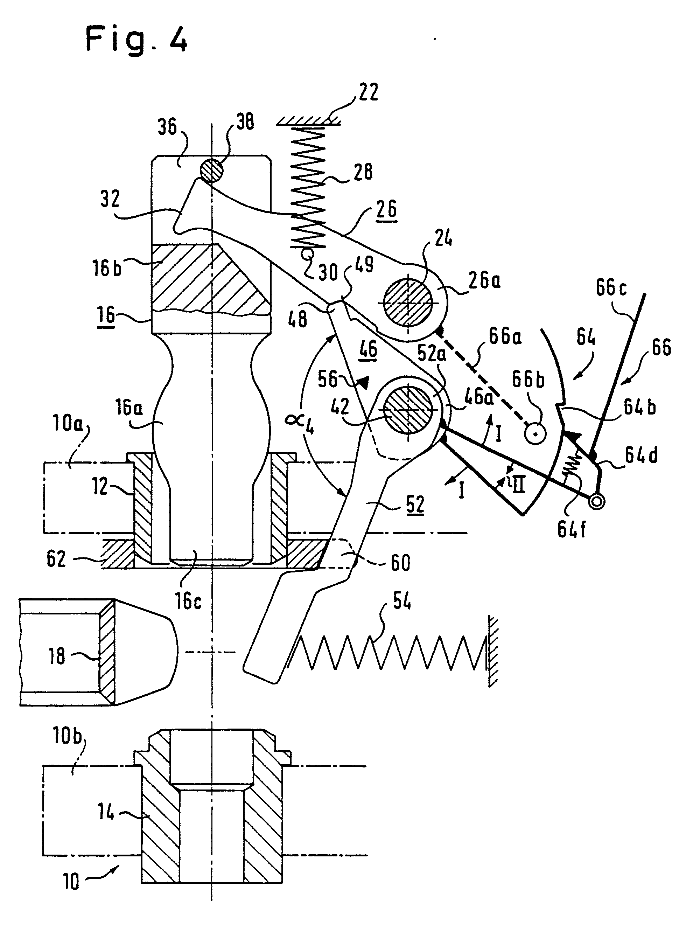

In Fig. 2 ist der Winkel $\alpha_2$ größer geworden. Die Naben 52a und 46a haben sich im ersten Relativdrehsinn I gegeneinander verdreht. Die Sperrklinke 64d ist in den Bereich der Sperrast 64b gelangt. Gleichzeitig ist aber der Nocken 66b gegen die Sperrklinkenausrückstange 66c angefahren, so daß die Sperrklinke 64d trotz Drehung im ersten Relativdrehsinn I über die Sperrast 64b hinwegfahren kann. Dieses ist notwendig, da ja wie aus Fig. 2 ersichtlich, der Auslösehebel 52 mit seiner Anlagefläche 57 gegen die Anschlagfläche 58 der Zugöse 18 anfährt, denn die Zugöse 18 befindet sich nach wie vor innerhalb des Kupplungskörpers 10. Würde die Freilaufmitnahmevorrichtung 64 bei dem Übergang des Abstützhebels 46 aus der Stellung gemäß Fig. 1 in die Stellung gemäß Fig. 2 und weiter in die Stellung gemäß Fig. 3 sperren, so wäre die weitere Schwenkbewegung des Abstützhebels 46 über die Stellung der Fig. 2 hinaus nicht möglich, denn der Auslösehebel würde an der Zugöse 18 anschlagen und über die Sperrklinke 64d und die Sperrast 64b die weitere Verdrehung des Abstützhebels 46 im Uhrzeigersinn blockieren. Da aber nun durch die Sperrungsunterdrückungsvorrichtung 66, also durch die Anlage des Nockens 66b an der Sperrklinkenausrückstange 66c, die Sperrwirkung der Freilaufmitnahmevorrichtung 64 unterdrückt ist, kann über die Stellung der Fig. 2 hinaus der Abstützhebel 46 in die Stellung gemäß Fig. 3 im ersten Relativdrehsinn I weiter verschwenkt werden, wobei der Winkel $\alpha$ den noch größeren Wert $\alpha_3$ annimmt. Damit gelangt die Mitnahme- und Abstützspitze 48 in Eingriff mit der Stützrast 49 des Aufwerfhebels 26. Der Auslösehebel 52 liegt mit seiner Anlagefläche 57 weiterhin an der Anschlagfläche 58 der Zugöse 18 an. Der Kupplungsbolzen ist aber nunmehr in die Nicht-Kupplungsstellung verschoben und in dieser durch den Eingriff der Teile 38 und 49 gehalten. Nunmehr wird die Zugöse 18 aus dem Kupplungskörper 10 ausgefahren, wie in Fig. 4 dargestellt. Dabei bleibt der Abstützhebel 46 mit seiner Mitnahme- und Abstützspitze 48 in Eingriff mit der Stützrast 49. Der Kupplungsbolzen 16 bleibt also in seiner angehobenen Nicht-Kupplungsstellung. Der Auslösehebel 52 kann aber nunmehr unter der Wirkung der Auslösehebelfeder 54 aus der Stellung gemäß Fig. 3, d.h. aus seinem Betriebsstellungsbereich, in die Stellung gemäß Fig. 4, das ist die Auslösebereitschaftsstellung übergehen. Dabei bewegt sich der Auslösehebel 52 im zweiten Relativdrehsinn II gegenüber dem Abstützhebel 46, d.h. der Winkel $\alpha$ wird kleiner und nimmt den Wert $\alpha_4$ an. Entsprechend dem zweiten Relativdrehsinn II kann dabei die Sperrklinke 64d über die Sperrast 64b hinweggleiten, obwohl die Sperrungsunterdrückungsvorrichtung 66 nicht wirksam ist. Man erkennt in Fig. 4 weiter, daß der Auslösehebel 52 in den Schlitz 60 eingefahren ist, so daß das Kupplungsmaul unverdrehbar festgelegt ist.

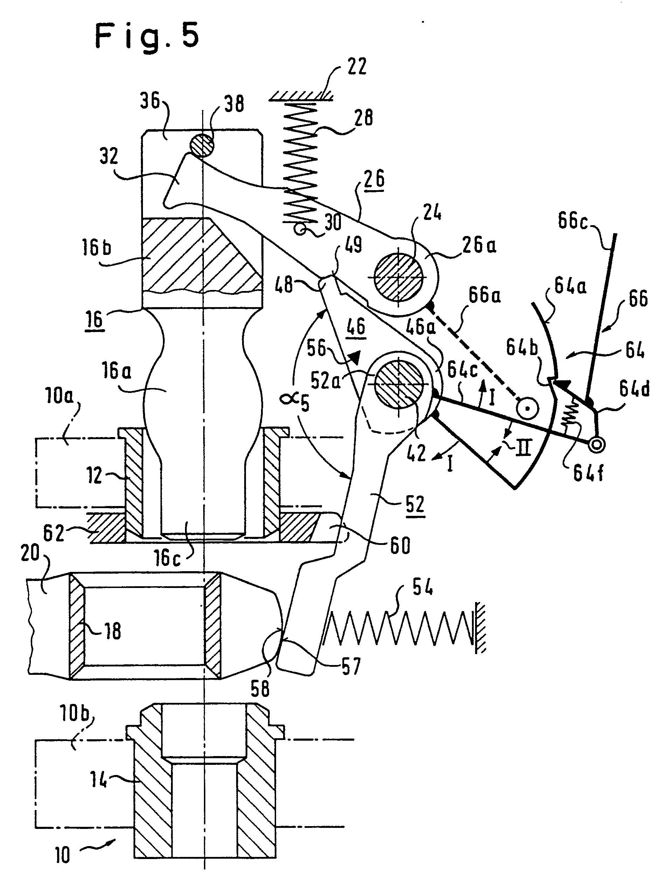

Der Übergang von Fig. 4 nach Fig. 5 entspricht erneuter Einkupplung. Dabei fährt die Zugöse 18 mit ihrer Anschlagfläche 58 gegen die Anlagefläche 57 des Auslösehebels 52 an. Der Abstützhebel 46 bleibt zunächst noch in der Haltestellung gemäß Fig. 4 bis, wie in Fig. 5 dargestellt, die Sperrklinke 64d in die Sperrast 64b einfällt als Folge der Relativdrehung zwischen dem Abstützhebel 46 und dem Auslösehebel 52 im ersten Relativdrehsinn I (Vergrößerung des Winkels $\alpha$ auf den Wert $\alpha_5$). Wenn nunmehr, ausgehend von der in Fig. 5 gezeigten Stellung die Zugöse 18 noch weiter in den Kupplungskörper 10 einfährt, so wird der Abstützhebel 46 über die Freilaufmitnahmevorrichtung 64 von dem Auslösehebel 52 mitgenommen, so daß die Mitnahme- und Abstützspitze 48 aus der Stützrast 49 ausrückt und der Aufwerfhebel 26 unter der Wirkung der Aufwerfhebelfeder 28 wieder in die Stellung gemäß Fig. 1 zurückfällt. Am Ende dieser Bewegung liegt dann der Anschlag 56 des Abstützhebels 46 wieder an dem Auslösehebel 52 an, so daß auch dieser wieder die Stellung gemäß Fig. 1 einnimmt, in der ein Scheuern der Zugöse 18 an dem Auslösehebel 52 unterbunden ist.

Es ist auch möglich, den Kupplungsbolzen in die Kupplungsstellung dadurch überzuführen, daß die Betätigungswelle 42 im Gegenzeigersinn verdreht wird. Dann rastet die Mitnahme- und Abstützspitze 48 in Fig. 5 aus der Stützrast 49 aus. Dieses Absenken des Kupplungsbolzens 16 aus der Nicht-Kupplungsstellung gemäß Fig. 5 in die Kupplungsstellung gemäß Fig. 1 ist unter Umständen notwendig z.B. dann, wenn man für längeren Betrieb des Zugfahrzeugs ohne Anhänger, den Kupplungsbolzen 16 zur Vermeidung von Verschmutzung der Kupplungsbolzenaufnahmebuchsen 12, 14 in der abgesenkten Stellung, d.h. in der Kupplungsstellung haben will, oder wenn man eine Seilschlinge in die Kupplung einkuppeln will, deren Schlaffheit es nicht erlaubt, den Auslösehebel gegen die Wirkung der Auslösehebelstützfeder 54 zurückzudrücken.

Es ist auch möglich, bei nicht eingefahrener Zugöse 18, den Kupplungsbolzen aus der Stellung gemäß Fig. 1 in die Stellung gemäß Fig. 4 überzuführen. Dies geht genauso vor sich, wie bei eingekuppelter Zugöse mit dem einen Unterschied, daß der Auslösehebel 52 dann aus der Stellung gemäß Fig. 1 unter Vermeidung eines Anhaltens in der Zwischenstellung gemäß Fig. 2 sogleich in die Stellung gemäß Fig. 4 übergeht.

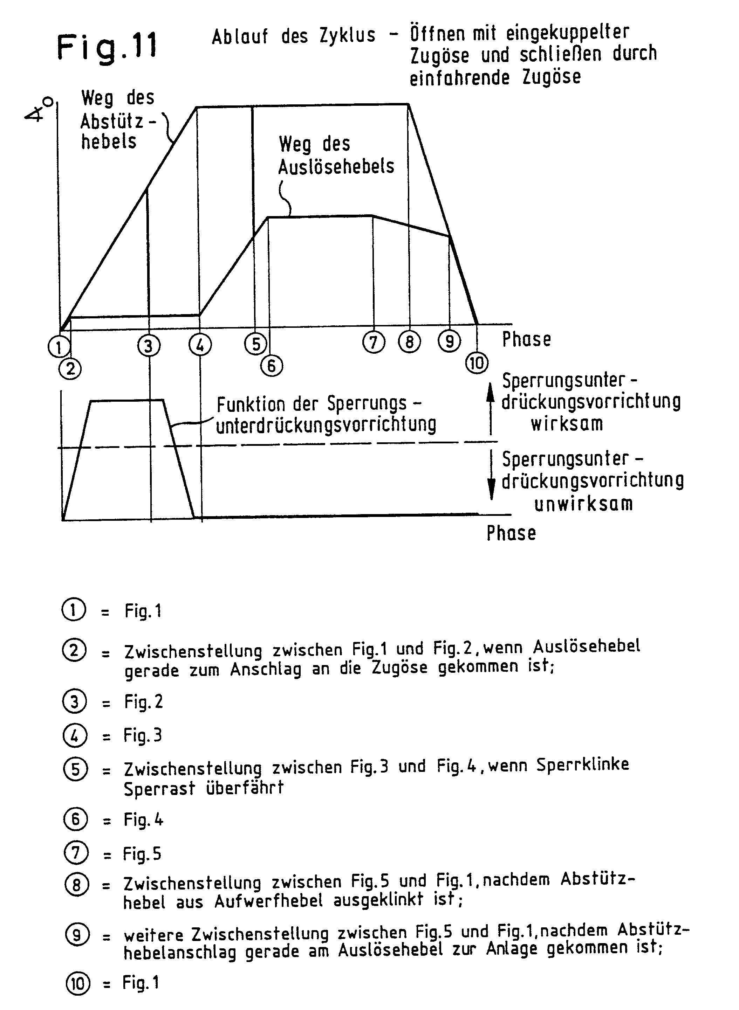

Der Vorgang des Auskuppelns bei eingefahrener Zugöse 18, des anschließenden Ausfahrens der Zugöse 18 aus dem Kupplungskörper 10 und des anschließenden Wiedereinkuppelns durch erneutes Einfahren der Zugöse 18 in den Kupplungskörper 10 ist als Ablaufdiagramm in Fig. 11 dargestellt, wobei die den einzelnen Phasen entsprechenden Stellungen bzw. Übergänge, in den Erläuterungen unterhalb der Figur angemerkt sind. Wesentlich ist, daß in der Phase ③ gemäß Fig. 11 und entsprechend der Fig. 2, die Sperrungsunterdrückungsvorrichtung 66 wirksam ist, so daß die Sperrklinke 64d gemäß Fig. 2 die Sperrast 64b überfahren kann.

Unter Berücksichtigung der Fig. 11 kann man die Ausbildung gemäß den Fig. 1 bis 5 auch durch folgendes Prinzip beschreiben:

a) der Abstützhebel 46 und der Auslösehebel 52 sind durch eine Verrastung 64d, 64b dergestalt miteinander verbunden, daß diese Verrastung dann und nur dann wirksam wird, wenn

a₁) die beiden Hebel 46, 52 sich in einer Stellung (Fig. 2) zueinander befinden, in der sie um einen bestimmten Differenzwinkel $\alpha_2$ gegeneinander verdreht sind;

a₂) diese Stellung (Fig. 2) in dem Relativdrehsinn I erreicht wird, bei der der Differenzwinkel $\alpha$ zunimmt.

b) Es existiert eine Rastunterdrückungsvorrichtung 66, welche die Funktion der Verrastung 64d, 64b abhängig von der Stellung des Aufwerfhebels 26 (oder des Abstützhebels 46 oder des Auslösehebels 52) in bestimmten Bereichen (Fig. 2) unterdrückt.

c) Die Verrastung 64d, 64b und die Rastunterdrückungsvorrichtung 66 arbeiten so zusammen, daß die Verrastung 64d, 64b einerseits während des Vorgangs des Öffnens der Kupplung bei eingekuppelter Zugöse 18 unterdrückt wird (Übergang von Fig. 1 nach Fig. 3), andererseits beim Einfahren der Zugöse 18 in die geöffnete und einkuppelbereite Kupplung wirksam ist (Übergang von Fig. 4 nach Fig. 1).

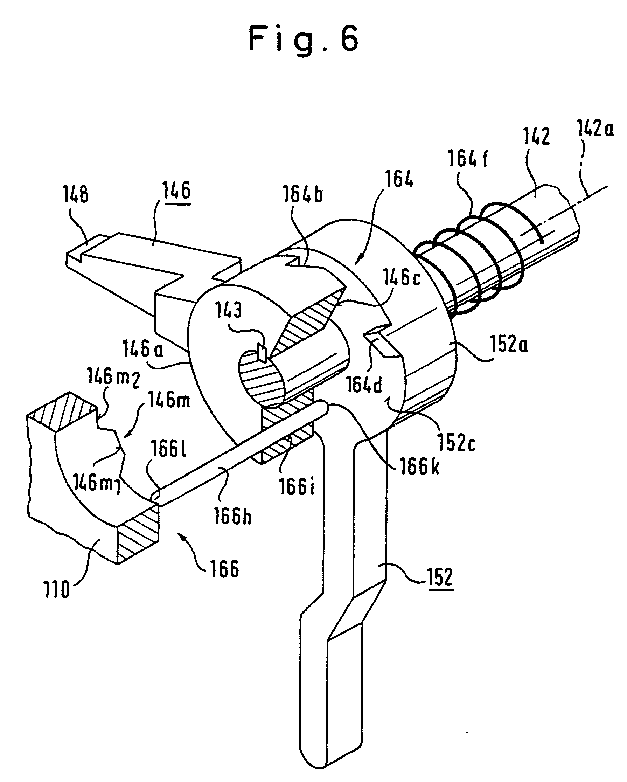

Fig. 6 zeigt eine Abwandlung gegenüber Fig. 1. Man erkennt in Fig. 6 einen Abstützhebel 146 mit einer Abstützhebelnabe 146a und einer Mitnahme- und Abstützspitze 148. Dieser Abstützhebel 146 ist auf einer Betätigungswelle 142 unverdrehbar angebracht, wie durch einen Keil 143 angedeutet. Auf der Betätigungswelle 142 ist ferner der Auslösehebel 152 mittels der Auslösehebelnabe 152a drehbar gelagert. Die Auslösehebelnabe 152a ist in Achsrichtung der Betätigungswelle 142 verschiebbar und durch eine Feder 164f in Richtung auf die Abstützhebelnabe 146a vorgespannt. An der Abstützhebelnabe 146a ist eine Sperrast 164b vorgesehen. Diese Sperrast 164b befindet sich an einer Stirnfläche 146c der Abstützhebelnabe 146a. An einer Stirnfläche 152c der Auslösehebelnabe 152a ist ein Rastvorsprung 164d angebracht, der zum Eingriff in die Sperrast 164b bestimmt ist und unter der Wirkung der Feder 164f in die Sperrast 164b einrastet, wenn durch Relativverdrehung der beiden Naben 146a, 152a die Sperrast 164b und der Rastvorsprung 146d in axiale Flucht miteinander gebracht sind.

Die übrigen Teile der Kupplung sind in Fig. 6 nicht eingezeichnet. Diese können genauso ausgebildet sein, wie in den Fig. 1 bis 5. Der Zustand der Fig. 6 entspricht dem Zustand gemäß Fig. 1. In einem dem Zustand der Fig. 2 entsprechenden Zustand befindet sich der Rastvorsprung 146d in axialer Flucht mit der Sperrast 164b. Der Rastvorsprung 164d kann aber nicht in die Sperrast 164b einfallen, weil dann wiederum eine Sperrungsunterdrückungsvorrichtung 166 wirksam ist. Die Sperrungsunterdrückungsvorrichtung 166 umfaßt einen Sperrungsunterdrückungsschieber 166h, welcher in einer Bohrung 166i der Abstützhebelnabe 146a verschiebbar geführt ist und mit seinem einen Ende 166k an der Auslösehebelnabe 152a und zwar an deren Stirnfläche 152c angreift und mit seinem anderen Ende 166l an einer Nockenbahn 146m anliegt, welche an dem Kupplungskörper 110 ausgebildet ist. Wenn die Konstruktion gemäß Fig. 6 durch Verdrehen des Abstützhebels 146 im Uhrzeigersinn einen Zustand erreicht, welcher dem Zustand der Fig. 2 entspricht, d.h. wenn der Rastvorsprung 164d in Axialflucht mit der Sperrast 164b steht,so ist der Sperrungsunterdrückungsschieber 166h mit seinem Ende 166l in den Bereich 146m₁ der Nockenbahn 146m getreten, so daß die Auslösehebelnabe 152a gegen die Wirkung der Feder 164f von der Abstützhebelnabe 146a axial weggetreten ist und der Rastvorsprung 164d nicht in die Sperrast 164b einfallen kann.

In einem der Fig. 5 entsprechenden Zustand der Konstruktion nach Fig. 6 greift der Sperrungsunterdrückungsschieber 166h an einem Abschnitt 146m₂ der Nockenbahn 146m an, so daß der Rastvorsprung 164d in die Sperrast 164b einfallen kann. Der Rastvorsprung 164d und die Sperrast 164b bilden hier die Freilaufmitnahmevorrichtung 164.

Die Anordnung gemäß Fig. 6 verhält sich im übrigen genauso wie die Anordnung nach den Fig. 1 bis 5. Es ist ein Ein- und Auskuppeln auch beinicht vorhandener Zugöse möglich. Zu beachten ist noch, daß der Abstützhebel 146 gekröpft ist, so daß er annähernd in derjenigen achsnormalen Ebene liegt, in der auch der Auslösehebel 152 liegt. Dadurch wird Platz gespart. Zum anderen kann die Kröpfung des Abstützhebels 146 an dem Auslösehebel 152 anschlagen, wodurch der Abstützhebelanschlag 56 gemäß Fig. 1 ersetzt werden kann.

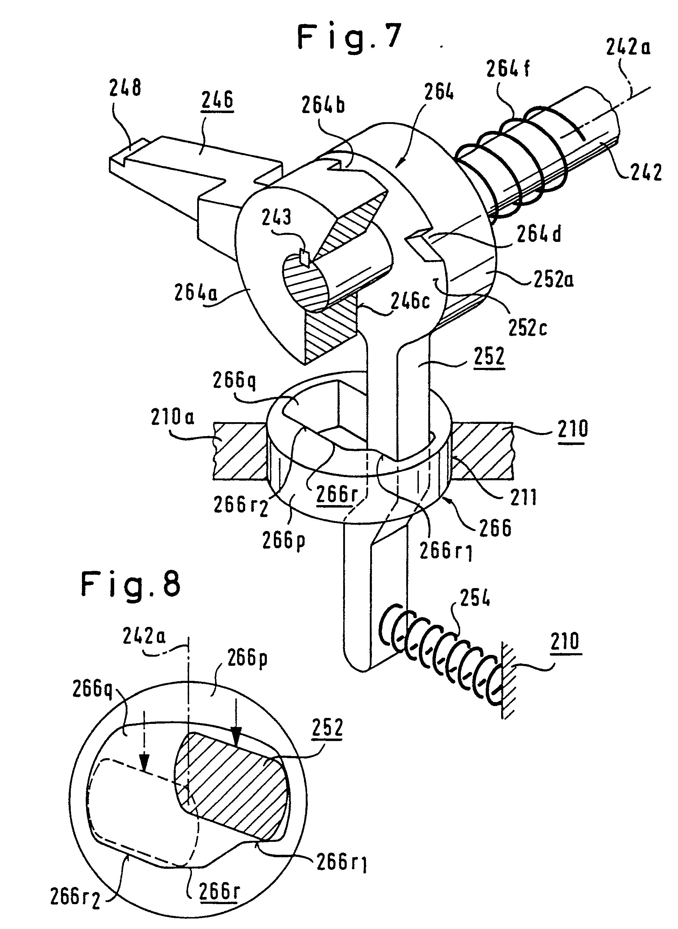

In Fig. 7 ist eine Ausführungsform dargestellt, die hinsichtlich der Ausbildung der Freilaufmitnahmevorrichtung derjenigen gemäß Fig. 6 entspricht. Analoge Teile sind mit den gleichen Bezugszeichen versehen,

wie in Fig. 6, jeweils vermehrt um die Zahl 100. Unterschiedlich gegenüber der Ausführungsform nach Fig. 6 ist die Ausbildung der Sperrungsunterdrückungsvorrichtung 266. Der Auslösehebel 252 durchsetzt eine Bohrung des oberen Gabelschenkels 210a. Diese Bohrung ist mit 211 bezeichnet. In die Bohrung 211 ist ein Ring 266p eingesetzt. Der Ring 266p weist einen Durchgang 266q für den Auslösehebel 252 auf. Der Umfang des Durchgangs 266q ist als Führungskante 266r ausgebildet. Wenn der Auslösehebel 252 m die Betätigungswelle 242 schwenkt, so folgt er unter der Wirkung der Feder 264f der Führungskante 266r. In Fig. 7 ist eine Stellung gezeigt, in welcher die Auslösehebelnabe 252a gegen die Wirkung der Feder 264f verschoben ist, so daß die Stirnfläche 252c von der Stirnfläche 246c abgehoben hat, weil nämlich der Auslösehebel 252 an dem Abschnitt 266r₁ der Führungskante 266r anliegt. Es kann also wenn durch Verdrehung des Abstützhebels 246 im Uhrzeigersinn eine der Fig. 2 entsprechende Stellung erreicht wird, der Rastvorsprung 264d nicht in die Sperrast 264b einfallen. In einer der Fig. 5 entsprechenden Stellung befindet sich der Auslösehebel 252 im Bereich des Abschnitts 266r₂ der Führungskante 266r, so daß der Rastvorsprung 264d in die Sperrast 264b einfallen kann.

In Fig. 8 erkennt man, daß der Auslösehebel 252 einen parallelogrammförmigen Querschnitt an der Stelle des Durchtritts durch den Durchgang 266q besitzt und gegenüber einer zur Betätigungswelle 242 senkrechten Ebene verschränkt ist. Auf diese Weise läßt sich innerhalb des Durchgangs 266q ein maximaler Querschnitt des Auslösehebels 252 mit der geforderten Beweglichkeit unterbringen.

Auch bei der Ausführungsform nach Fig. 7 sind alle Funktionen möglich, die in Zusammenhang mit den Fig. 1 bis 5 beschrieben wurden. Insbesondere ist es auch möglich, beinichtvorhandener Zugöse,durch Drehen der Betätigungswelle 242 Aus- und Einzukuppeln.

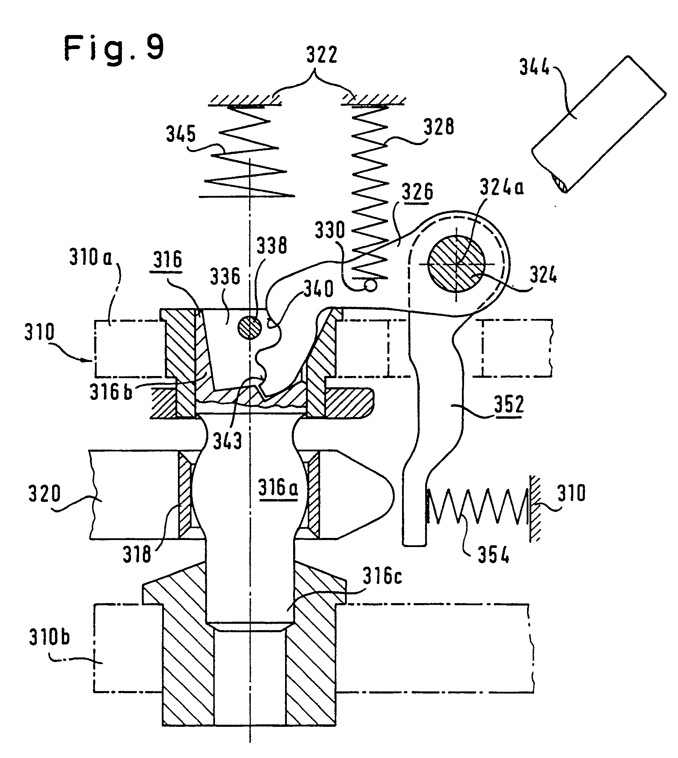

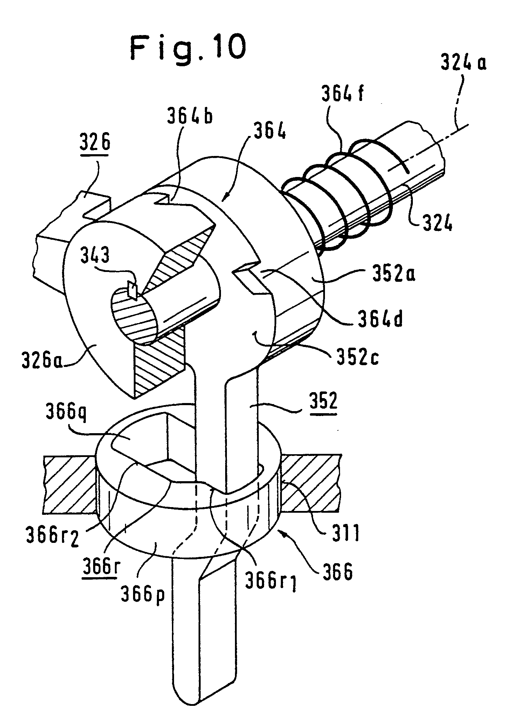

In Fig. 9 ist eine sogenannte "Ein-Wellen-Kupplung" dargestellt. Analoge Teile sind mit gleichen Bezugszeichen versehen, wie in Fig. 1, jeweils vermehrt um die Zahl 300. In dieser Ausführungsform ist der Aufwerfhebel 326 drehfest auf einer Betätigungswelle 324 angeordnet, die mit einem Betätigungshandgriff 344 verbunden ist. Der Auslösehebel 352 ist auf der Betätigungswelle 324 frei drehbar gelagert. An dem Aufwerfhebel 326 ist neben der Anhebekante 340 eine Halterast 343 angebracht, welche im voll ausgekuppelten Zustand entsprechend der Fig. 4 den Anhebebolzen 338 aufnimmt, wobei dann der Anhebebolzen 338 und die Halterast 343 unter der Wirkung einer Feder 345 ineinander verrastet sind. Die Freilaufmitnahmevorrichtung und die Sperrungsunterdrückungsvorrichtung sind bei der Ausführungsform gemäß Fig. 9, wie in Fig. 10 dargestellt, genauso ausgebildet wie bei der Ausführungsform gemäß Fig. 7.

Analoge Teile sind mit gleichen Bezugszeichen bezeichnet, wie in Fig. 7, jeweils weiter vermehrt um die Zahl 100. Der einzige Unterschied gegenüber Fig. 7 besteht darin, daß die Freilaufmitnahmevorrichtung 364 zwischen der Nabe 352a des Auslösehebels 352 einerseits und der Nabe 326a des Aufwerfhebels 326 andererseits vorgesehen ist. Die Sperrungsunterdrückungsvorrichtung 366 entspricht ohne Einschränkung derjenigen gemäß Fig. 7 und Fig. 8.

Auch bei der Ausführungsform nach den Fig. 9 und 10 sind alle Funktionen möglich, die im Zusammenhang mit den Fig. 1 bis 5 beschrieben wurden. Insbesondere ist es auch bei der Ausführungsform nach den Fig. 9 und 10 möglich, die Kupplung bei nicht vorhandener Zugöse 318 durch Drehen der Betätigungswelle 324 im Uhrzeigersinn zu öffnen und durch Drehen im Gegenzeigersinn zu schließen.

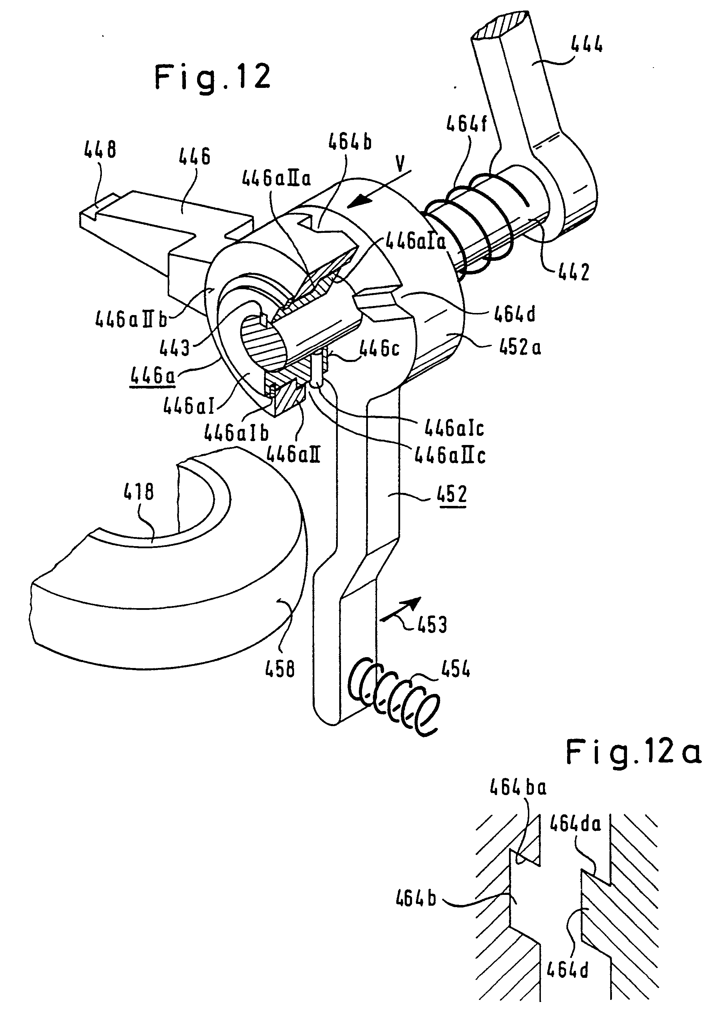

Die Ausführungsform gemäß Fig. 12, 13, 14 entspricht hinsichtlich der Gestaltung der Freilaufmitnahmevorrichtung im Prinzip der Ausführungsform nach Fig. 6. Analoge Teile sind mit den gleichen Bezugszeichen versehen wie in Fig. 6, jeweils vermehrt um die Zahl 300.

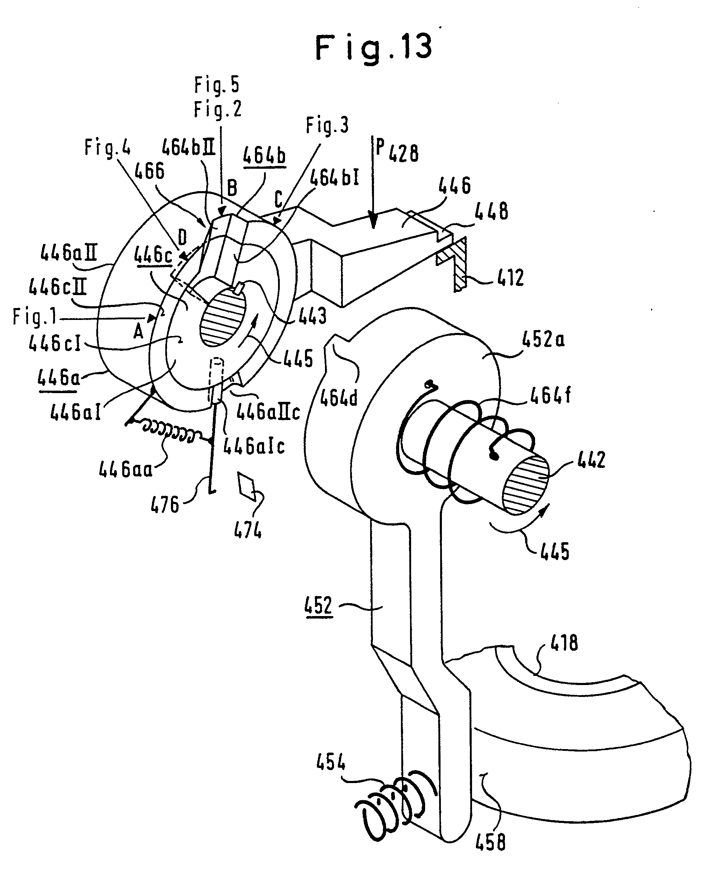

In der Ausführungsform gemäß Fig. 12, 13 und 14 ist das Drehteil 446a zusammengesetzt aus zwei Drehteilelementen 446aI und 446aII. Das Drehteilelement 446aI ist durch den Keil 443 unverdrehbar und axial unverschiebbar auf der Betätigungswelle 442 angeordnet. Das Drehteilelement 446aII, welches den Abstützhebel 446 trägt und als eine Abstützhebelnabe ausgebildet ist, ist auf dem Drehteilelement 446aI drehbar gelagert und in axialer Richtung gesichert. Zur axialen Sicherung des Drehteilelements 446aII auf dem Drehteilelement 446aI ist an dem Drehteilelement 446aII ein Radialvorsprung 446aIa angebracht, welches gegen eine Stützfläche 446aIIa anliegt. Außerdem ist ein Sprengring 446aIb vorgesehen, welcher auf dem Drehteilelement 446aI sitzt und gegen eine Stirnfläche 446aIIb anliegt. Das Drehteilelement 446aII ist auf dem Drehteilelement 446aI beschränkt winkelbeweglich, und zwar dadurch, daß auf dem Drehteilelement 446aI ein Spielbegrenzungsstift 446aIc sitzt, welcher in ein Langloch 446aIIc eingreift. Dieser Eingriff ist im einzelnen aus Fig. 13 zu entnehmen. Damit besteht ein Winkelspiel zwischen den beiden Drehteilelementen 446aI und 446aII. Die beiden Drehteilelemente 446aI und 446aII sind durch eine Spielbeseitigungsfeder 446aa gegeneinander vorgespannt in eine erste Relativwinkellage, welche in Fig. 13 dargestellt ist.

Die Sperrast 464b setzt sich zusammen aus einem Sperrastabschnitt 464bI in dem ersten Drehteilelement 446aI und einem Sperrastabschnitt 464bII in dem zweiten Drehteilelement 446bII. In der in Fig. 13 dargestellten, durch die Spielbeseitigungsfeder 446aa bestimmten ersten Relativwinkellage liegen die beiden Sperrastabschnitte 464bI und 464bII derart in radialer Flucht, daß der Sperrvorsprung 464d in die Sperrast 464b eintauchen kann, wenn der Sperrvorsprung 464d in axialer Flucht mit der Sperrast 464b gelangt.

Dieser Zustand ist in Fig. 13 dargestellt.

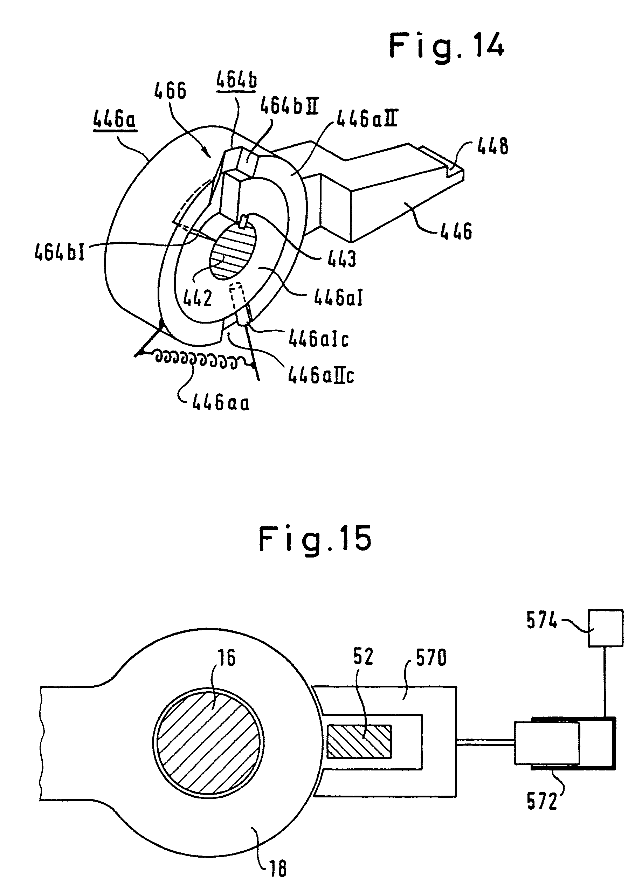

Wenn dagegen die beiden Drehteilelemente 446aI und 446aII die in Fig. 14 dargestellte zweite Relativwinkellage zueinander einnehmen, die dadurch bestimmt ist, daß der Stift 446aIc an dem anderen Ende des Langlochs 446aIIc anliegt, so liegen die Sperrastabschnitte 464bI und 464bII außer Radialflucht, so daß – wie ein Vergleich von Fig. 13 und 14 ergibt – der Sperrvorsprung 464d nicht mehr in die Sperrast 464b eintreten kann, weil er entweder gegen das Drehteilelement 464aII oder gegen das Drehteilelement 464aI stößt, bevor er in die Sperrast 464b eintauchen kann. In der Stellung gemäß Fig. 14 ist somit die Sperrungsunterdrückungsvorrichtung, die ganz allgemein mit 466 bezeichnet ist, wirksam.

Der Abstützhebel 446 unterliegt, wie in Fig. 13 durch den Kraftpfeil P 428 angedeutet, den ersten Federmitteln 428, die der Feder 28 gemäß Fig. 1 entsprechen, so daß der Abstützhebel unter der Federwirkung P 428 an der Buchse 412 anliegt. Solange der Betätigungshandgriff 444 unbelastet von einer Handbetätigungskraft ist, nehmen die Drehteilelemente 446aI und 446aII die in Fig. 13 eingezeichnete Stellung ein, d.h. die Drehteilelemente 446aI und 446aII befinden sich in der ersten Relativwinkellage. Das zweite Drehteilelement 452a ist die Nabe des Auslösehebels 452 und ist auf der Betätigungswelle 442 drehbar gelagert. An dem Auslösehebel 452 greift die Auslösehebelfeder 454 an, die auch in Fig. 1 dargestellt ist. An der Auslösehebelnabe 452a greift außerdem die Druckfeder 464f an, die auch in Fig. 6 dargestellt ist und dazu dient, den Rastvorsprung 464d gegen die Stirnfläche 446c anzudrücken und zum gegebenen Zeitpunkt das Einrasten des Rastvorsprungs 464d in die Rastausnehmung 464b zu bewirken. Es sei an dieser Stelle bemerkt, daß die Funktion der Auslösehebelfeder 454 auch von der Feder 464f mit übernommen werden kann, wie in Fig. 13 dadurch zum Ausdruck gebracht, daß die Feder 464f drehmomentschlüssig sowohl an der Betätigungswelle 442 als auch an dem Drehteil 452a angreift. Dann könnte die Feder 454 in Fig. 13 entfallen.

Die Funktionsstellungen gemäß Fig. 1 bis 5 sind auch bei der Ausführungsform nach den Fig. 12 bis 14 möglich. In einer der Fig. 1 entsprechenden Funktionsstellung liegt der Rastvorsprung 464d an der Stirnfläche 446c, die von einer Stirnfläche 446cI und einer Stirnfläche 446cII gebildet ist, in der Position A an, die in Fig. 13 eingezeichnet ist und dort mit Fig. 1 bezeichnet ist.

Durch Drehen der Betätigungswelle 442 im Öffnungssinn 445 gemäß Fig. 13 wird die Funktionsstellung entsprechend Fig. 2 herbeigeführt. Bei Beginn der Drehung der Betätigungswelle 442 im Öffnungssinn 445 nimmt die Betätigungswelle zunächst nur das Drehteilelemnent 446aI über den Keil 443 mit. Der Abstützhebel 446 bleibt auf der Buchse 412 liegen dank der stärkeren Federwirkung P 428; die Spielbeseitigungsfeder 446aa wird gespannt, bis der Stift 446aIc die Stellung gemäß Fig. 14 einnimmt. Wenn die Betätigungswelle dann weiter im Öffnungssinn 445 gedreht wird, so wird das Drehteilelement 446aII mitgenommen und der Abstützhebel 446 hebt über den den Aufwerfhebel 26 (Fig. 1) den Kupplungsbolzen an, wie in Fig. 2 dargestellt. Der Auslösehebel 452 behält seine Stellung gemäß Fig. 13 bei, da er durch die Auslösehebelfeder 454 bzw. die Feder 464f gegen die Fläche 458 der Zugöse 418 angedrückt wird. Dies hat zur Folge, daß infolge der weiteren Drehung des Drehteilelements 446aII der Rastvorsprung 464d dann in Flucht mit der Sperrast 464b gelangt, d.h. in Fig. 13 eine Stellung B einnimmt, die der Fig. 2 entspricht. Der Sperrvorsprung 464d kann aber nun nicht in die Sperrast 464b einfahren, weil durch die schon vorher eingetretene Verdrehung der beiden Drehteilelemente 446aI und 446aII in die zweite Relativwinkellage gemäß Fig. 14 das Einfallen des Rastvorsprungs 464d in die Sperrast 464 unterdrückt ist. Dieser Zustand entspricht dem Zustand der Fig. 2, wo die Sperrklinke 64d nicht in die Sperrast 64b einfallen kann. Bei einem Weiterdrehen der Betätigungswelle 442 im Öffnungssinn gemäß Drehpfeil 445 gelangt deshalb der Sperrvorsprung 464d schließlich in eine Relativlage C gemäß Fig. 13, die der Fig. 3 entspricht. Dies bedeutet, daß nunmehr der Kupplungsbolzen auch eine Stellung entsprechend der Fig. 3 einnimmt. Ist diese Stellung erreicht, so wird der Handbetätigungshebel 444 losgelassen, so daß die beiden Drehteilelemente 446aI und 446bI wieder in die erste Relativwinkellage zurückkehren, die in Fig. 13 dargestellt ist. Wenn nun entsprechend dem Übergang von Fig. 3 nach Fig. 4 die Zugöse 418 ausfährt, so kann der Auslösehebel 452 und mit ihm die Auslösehebelnabe 452a unter der Wirkung der Auslösehebelfeder 454 in Fig. 13 seine Drehung im Gegenuhrzeigersinn vollziehen, so daß der Rastvorsprung 464d über die Rastausnehmung 464b hinwegfährt und in eine Stellung D gelangt, die der Fig. 4 entspricht, wie auch in Fig. 13 durch den Hinweis "Fig. 4" angedeutet. Der Übergang des Rastvorsprungs 464d von der Relativposition C in Fig. 13 in die Position D der Fig. 13 ist wegen der Form der Rastausnehmung 464b möglich, obwohl die beiden Rastausnehmungsabschnitte 464bI und 464bII nach Aufhören der Kraftwirkung auf die Betätigungswelle 442 wieder in radialer Flucht miteinander sind.

Soll nun wieder eingekuppelt werden, was dem Übergang von der Fig. 4 in die Fig. 5 entspricht, so fährt die Zugöse 418 gegen den Auslösehebel 452 an und bewegt diesen in Fig. 13 im Uhrzeigersinn, so daß der Rastvorsprung 464d aus der Relativstellung D wieder in die Relativstellung B gelangt, die der Fig.

5 entspricht. Dies entspricht dem Eingriff der Sperrklinke 64d in die Rastausnehmung 654b gemäß Fig. 5. Da beim Einführen der Zugöse 418 keine Kraftwirkung auf den Handbetätigungshebel 444 ausgeübt wird, nehmen die beiden Drehteilelemente 446aI und 446aII die Relativwinkellage gemäß Fig. 13 ein, d.h. der Rastvorsprung 464d kann nunmehr in die Rastausnehmung 464b einfallen und auf dem weiteren, durch das Einschieben der Zugöse 418 bewirkten Schwenkweg den Drehteil 446a und damit den Abstützhebel 446 mitnehmen, so daß – wieder betrachtet anhand der Fig. 5 – die Spitze 448 des Abstützhebels 446 aus der Stützrast 49 herausgeschwenkt wird. Damit stellt sich wieder der Zustand gemäß Fig. 1 ein.

Auch bei dieser Ausführungsform ist es möglich, bei nicht eingefahrener Zugöse 418 den Kupplungsbolzen aus der Stellung gemäß Fig. 1 in die Stellung gemäß Fig. 4 überzuführen. Dies geht genauso vor sich wie bei eingekuppelter Zugöse, mit dem einen Unterschied, daß der Auslösehebel 452 dann aus der Stellung gemäß Fig. 1 sogleich in die Stellung gemäß Fig. 4 übergeht oder – anders ausgedrückt – unter Bezugnahme auf Fig. 13 der Rastvorsprung 464d von der Relativposition A sogleich in die Relativposition D übergeht.

In Fig. 12a ist der Rastvorsprung 464d mit einer Hinterschneidung 464da dargestellt, während die Rastausnehmung 464b eine Hinterschneidung 464ba aufweist. Diese Hinterschneidungen sind vorgesehen für den Fall, daß die Zugöse 418 mit einer Schrägkomponente an dem Auslösehebel 452 anfährt, welche die Tendenz hat, den Auslösehebel 452 in Richtung des Pfeils 453 zu verschieben. Eine solche Verschiebung wird dann durch die ineinandergreifenden Hinterschneidungen 464da und 464ba unterdrückt, so daß sich der Funktionszustand gemäß Fig. 5 mit Sicherheit einstellen kann, d.h. die Kupplung durch die einfahrende Zugöse in die Kupplungsstellung übergeführt werden kann.

In Fig. 15 ist dargestellt, daß an der Zugöse 18 ein den Auslösehebel 52 umfassender Spielausschaltungskörper 570 angreift, welcher die Zugöse 18 derart an den Kupplungsbolzen 16 andrückt, daß ein Spiel zwischen der Zugöse 18 und dem Kupplungsbolzen 16 unterdrückt ist. Der Spielaussschaltungskörper 570 ist durch ein Kraftgerät 572 beaufschlagt, welches etwa in der Weise wirkt, wie in der DE-B-25 02 944 beschrieben. Bei Vorhandensein einer solchen Spielausschaltungsvorrichtung 570, 572 ist es wesentlich, daß das Spiel zwischen dem Kupplungsbolzen 16 und der Zugöse 18 wiederhergestellt wird, die Spielausschaltvorrichtung 570 also unwirksam wird, bevor die Anhebebewegung des Kupplungsbolzens (Übergang von Fig. 1 nach Fig. 2) beginnt.

Wenn nun – wie in der Ausführungsform nach den Fig. 12 bis 14 dargestellt – zwischen den Drehteilelementen 446aI und 446aII ein Spiel besteht, welches bedingt ist durch den Stift 446alc einerseits und das Langloch 446allc andererseits, dann wird bei Beginn des Drehens der Betätigungswelle 442 im Öffnungssinn 445 der Abstützhebel 446 zunächst nicht mitgenommen, bis das durch die Länge des Langlochs 446allc bedingte Spiel überwunden ist.

Diese Vorlaufbewegung der Betätigungswelle 442 gegenüber dem Abstützhebel 446 kann dazu ausgenutzt werden, um ein Steuerelement 574 anzusteuern, welches in Fig. 13 eingezeichnet und dort mit 474 bezeichnet ist. Sobald die Verlängerung 476 des Stifts 446alc das Steuerelement erreicht – und dies geschieht noch, beovr die Stellung gemäß Fig. 14 erreicht wird – löst das Steuerelement 474 bzw. 574 einen Schaltbefehl an das Kraftgerät 572 aus, so daß der Spielausschaltungskörper 570 fortan nicht mehr an die Zugöse 18 angedrückt wird.

Bei der unter Bezugnahme auf Fig. 12 bis 14 beschriebenen Lösung ist die Sperrungsunterdrückungsvorrichtung auch wirksam, wenn die Kupplung ohne Vorhandensein einer Zugöse in die Nicht-Kupplungsstellung überführt wird. Dies ist aber unschädlich.

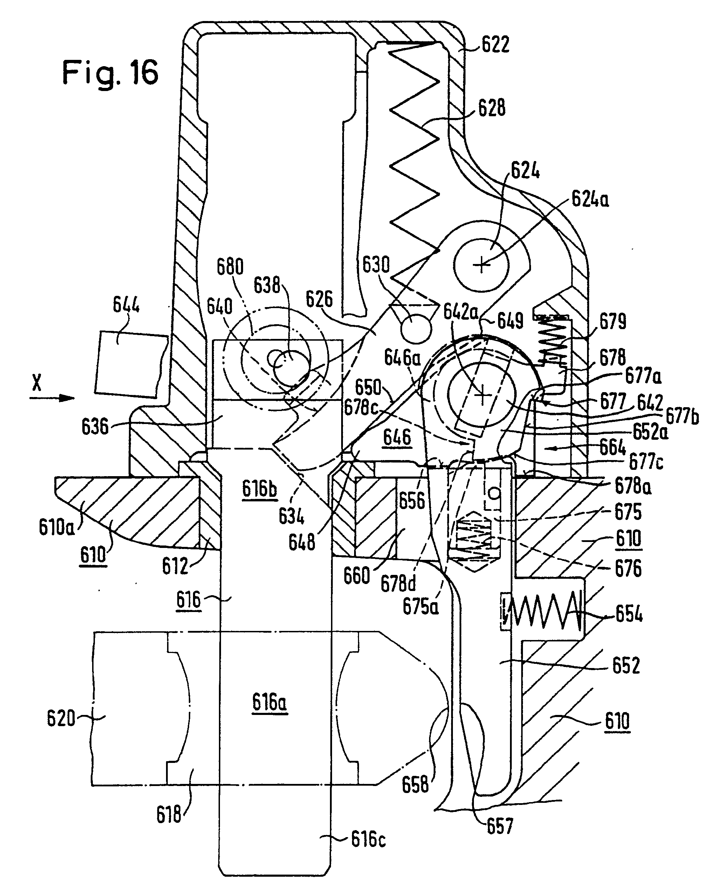

In den Figuren 16 bis 22 sind analoge Teile mit gleichen Bezugszeichen bezeichnet wie in den Figuren 1 bis 5, jeweils vermehrt um die Zahl 600.

Die Ausführungen zu den Figuren 1 bis 5 gemäß Seiten 28 bis 35 gelten sinngemäß auch für die Ausführungsform nach den Figuren 16 bis 22. Auch bei der Ausführungsform der Figuren 16 bis 22 ist eine Freilaufmitnahmevorrichtung 664 zwischen der Abstützhebelnabe 646a und der Auslösehebelnabe 652a vorgesehen.

Diese Freilaufmitnahmevorrichtung ist folgendermaßen aufgebaut :

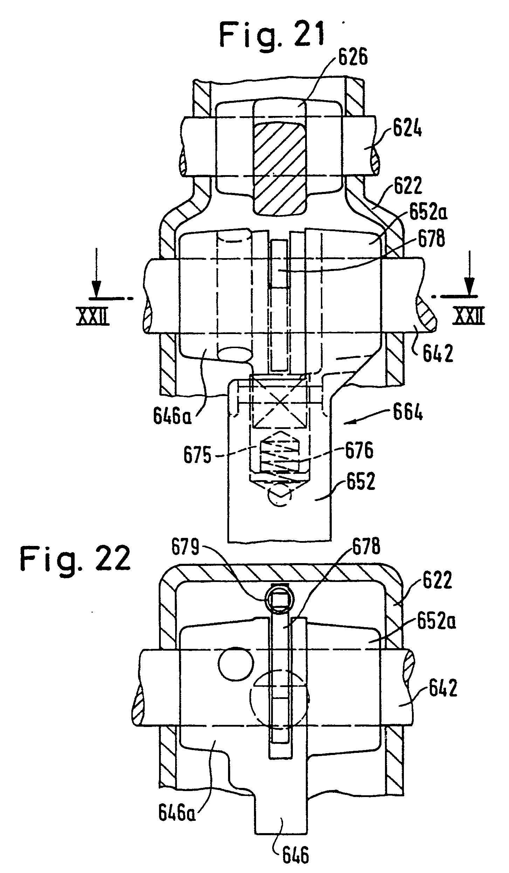

Wie aus den Figuren 16 und 21 zu ersehen, ist in der Auslösehebelnabe 652a bzw. in dem Auslösehebel 652 selber eine Sperrklinke 675 axial verschiebbar und unverdrehbar untergebracht. Diese Sperrklinke 675 ist durch eine Sperrklinkenfeder 676 in den Figuren 16 und 21 nach oben vorgespannt. An der Abstützhebelnabe 646a ist eine Sperrrast 677 mit einer Sperrflanke 677a und einer zweistufigen Steuerkurve 677b, 677c angebracht, welche zum Zusammenwirken mit dem oberen Ende 675a der Sperrklinke 675 bestimmt ist. Auf der Betätigungswelle 642 ist ein Sperrungsunterdrückungselement in Form einer Sperrungsunterdrückungsscheibe 678 drehbar gelagert. Diese Sperrungsunterdrükkungsscheibe 678 ist durch eine Vorspannfeder 679 in die in Figur 16 dargestellte Sperrungsunterdrückungsstellung vorgespannt, wobei diese Sperrungsunterdrückungsstellung durch einen Anschlag einer Anschlagkante 678a an dem Kupplungskörper 610 bestimmt ist.

In Figur 16 ist der Kupplungsbolzen 616 in seiner Kupplungsstellung, in welcher er die Zugöse 618 durchgreift. Dementsprechend befindet sich der Aufwerfhebel 626 in seiner Sicherungsstellung gegenüber dem Kupplungsbolzen 616. Der Abstützhebel 646 liegt mit seiner Abstützspitze 648 auf der Buchse 612 auf und hält über den Anschlag 656 den Lösehebel 652 in seinem Betriebsstellungsbereich, und zwar in Abstand von der Zugöse 618. Die Sperrklinke 675 liegt mit ihrem oberen Ende 675a an dem Kurvenabschnitt 677c an. Die Sperrungsunterdrückungsscheibe befindet sich in der Sperrungsunterdrückungsstellung. Der Vorgang des Auskuppelns entspricht dem entsprechenden Vorgang bei der Ausführungsform nach den Figuren 1 bis 5. Aus dem Übergang von Figur 16 bis Figur 18 ist dieser Vorgang des Auskuppelns nachvollziehbar :

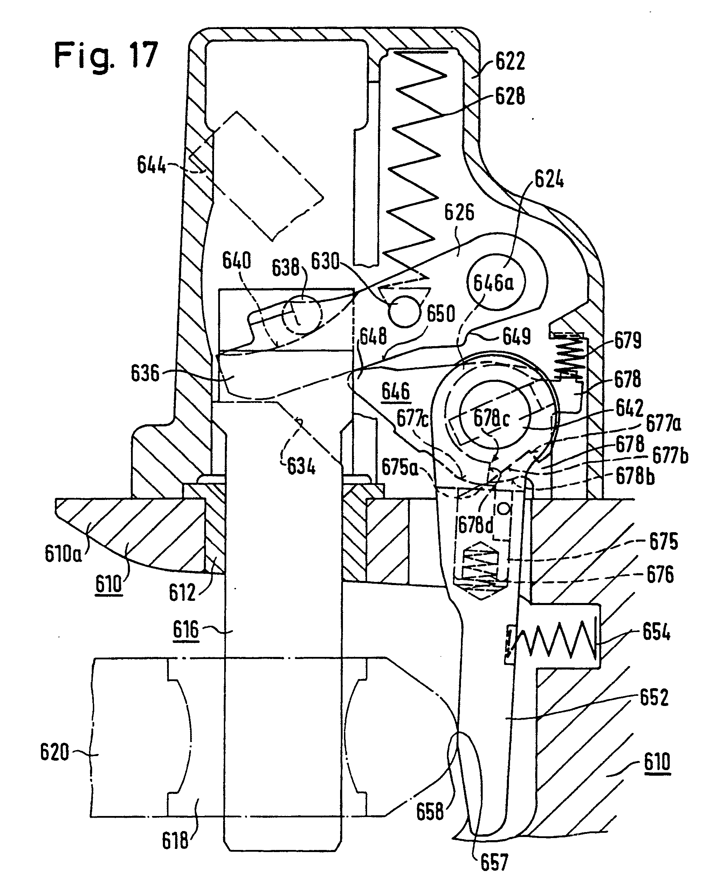

Zum Auskuppeln wird der Abstützhebel 646 vermittels der Betätigungswelle 642 und letztlich vermittels des Betätigungshandgriffs 644 in Figur 16 im Uhrzeigersinn verdreht, wobei der Abstützhebel 646 mit seiner Abstützspitze 648 über die Mitnahmekante 650 des Aufwerfhebels 626 gleitet und der Aufwerfhebel 626 gegen die Wirkung der Aufwerf hebelfeder 628 im Uhrzeigersinn verschwenkt wird, wobei weiter der Aufwerfhebel 626 über die Anhebekante 640 und den Anhebebolzen 638 den Kupplungsbolzen 616 mit nach oben nimmt und wobei der Auslösehebel 652 zum Anschlag an die Zugöse 618 gelangt (Figur 17). In Figur 17 liegt die Sperrklinke 675 mit ihrem oberen Ende 675a immer noch an dem Kurvenabschnitt 677c der Abstützhebelnabe 646a an und steht immer noch der Kante 678b der Sperrungsunterdrükkungsscheibe 678 gegenüber.

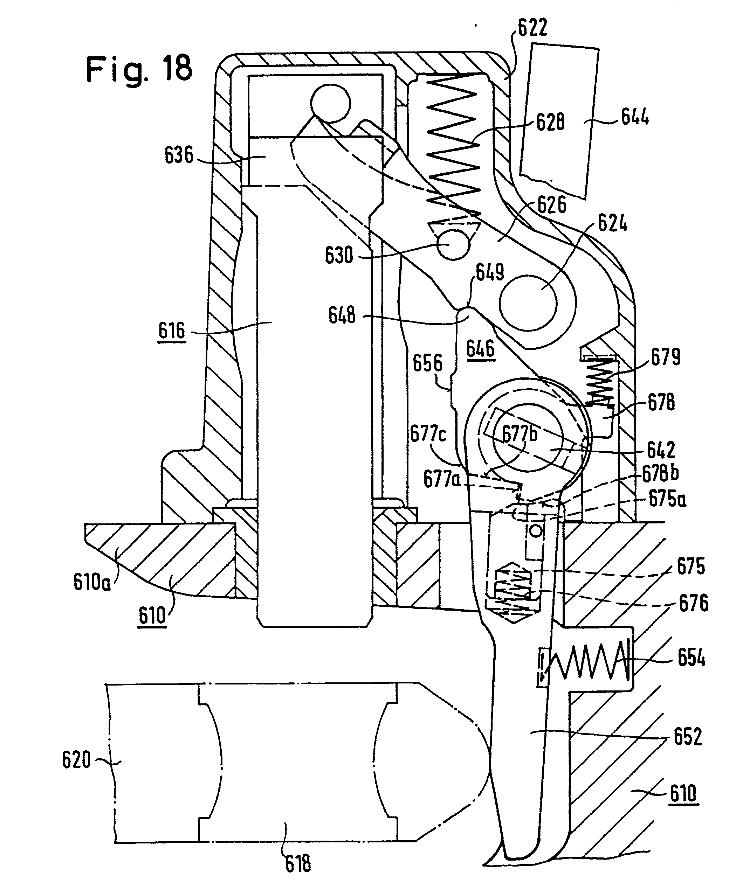

In Figur 18 ist der Abstützhebel 646 weiter verschwenkt. Die Sperrklinke 675 liegt nunmehr mit ihrem oberen Ende 675a an der Kante 678b der Sperrungsunterdrückungsscheibe 678 an. Die Sperrflanke 677a ist an dem oberen Ende 675 a der Sperrklinke 675 vorbeigetreten, was dadurch ermöglicht wurde, daß die Sperrklinke 675a durch die Anschlagkante 678b nach wie vor nach unten gehalten wurde. Der Aufwerfhebel 626 ist durch die Abstützspitze 648 gehalten. Es ist ausgekuppelt.

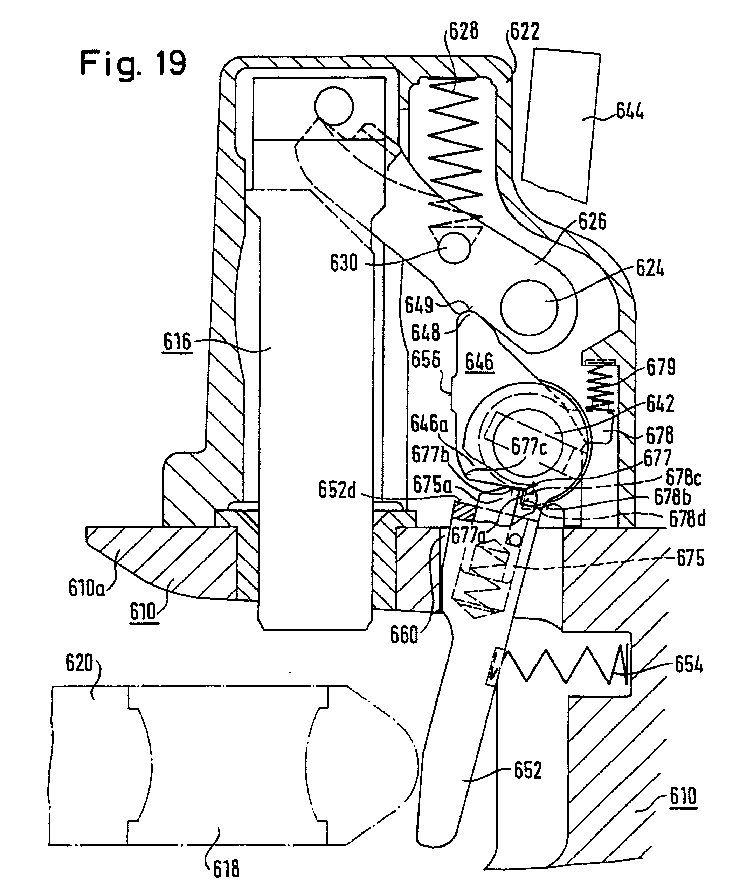

In Figur 19 ist die Zugöse 618 soweit ausgefahren, daß der Lösehebel 652 in seine Lösebereitschaftsstellung übergegangen ist. Dabei ist die Sperrklinke 675 mit ihrem oberen Ende 675a in die Rastkerbe 677 eingefallen und gleichzeitig in eine Zusatzrast 678c der Sperrungsunterdrückungsscheibe 678, welche durch eine Anlageflanke 678d begrenzt ist.

Ausgehend vom Zustand der Figur 19 kann nach vollständigem Rückzug der Zugöse 618 der Kupplungsbolzen 616 wieder in Kupplungsstellung dadurch zurückgeführt werden, daß mittels der Betätigungswelle 642 der Abstützhebel 646 in Figur 19 im Gegenzeigersinn verdreht wird und mit seiner Abstützspitze 648 aus der Stützrast 649 herausgedrückt wird. Dann bewegen sich der Aufwerfhebel 626 und ihm folgend der Abstützhebel 646 unter der Wirkung der Aufwerfhebelfeder 628 wieder in Richtung auf die Stellung gemäß Fig. 16. Dabei wird zunächst der Auslösehebel 652 durch die Auslösehebelfeder 654 noch in der Stellung der Figur 19 gehalten und die Abstützhebelnabe 646a drückt über die Kurvenabschnitte 677b und 677c die Sperrklinke 675a wieder nach unten in den Lösehebel 652 hinein. Erst wenn der Anschlag 656 wieder auf die Gegenanschlagfläche 652d trifft, wird auch der Lösehebel 652 wieder im Gegenzeigersinn in Richtung auf seine Stellung gemäß Figur 16 zurückgedrängt. Dabei trifft die Sperrklinke 675 aber nicht mehr gegen die Anlagekante 678b der Sperrungsunterdrückungsscheibe 678, weil die Sperrklinke 675 bereits zurückgedrückt ist. Der soweit beschriebene Vogang wird beispielsweise dann bewirkt, wenn man bei längerer Fahrt ohne Anhänger den Kupplungsbolzen 616 in Kupplungsstellung haben will, um eine Verschmutzung der Buchse in dem unteren Schenkel des Kupplungskörpers zu vermeiden. Auch dann, wenn man eine Seilschlaufe einkuppeln will, kann man den Einkupplungsvorgang, so wie eben beschrieben, durch Drehen der Betätigungswelle 642 auslösen.

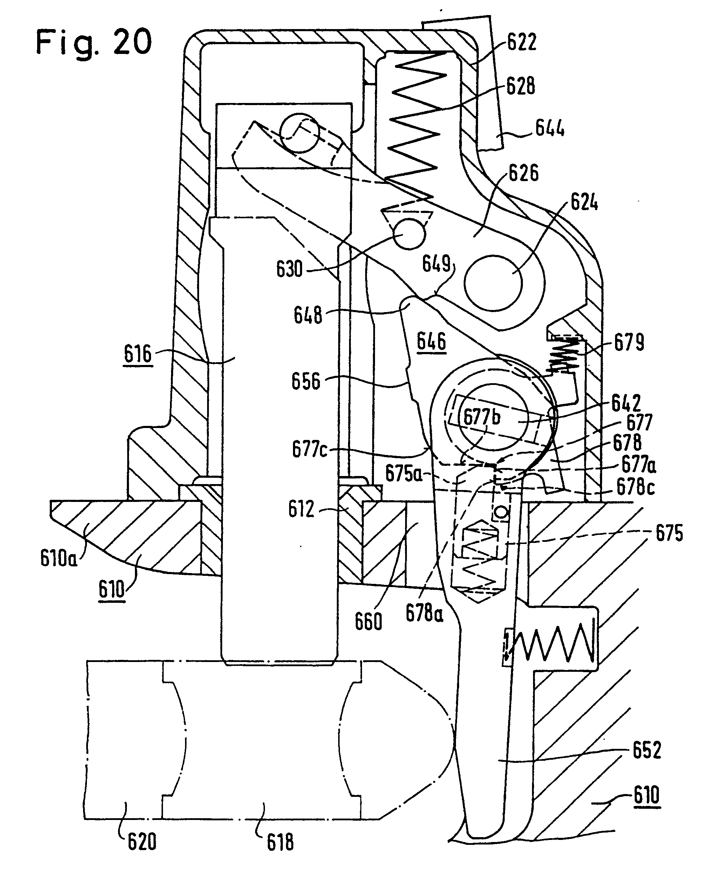

In der Regel will man, ausgehend von dem Zustand gemäß Figur 19, ein Einkuppeln, d.h. eine Überführung des Kupplungsbolzens 616 in die Kupplungsstellung, unter Durchgriff des Kupplungsbolzens 616 durch die Zugöse 618 dadurch herbeiführen, daß man die Zugöse 618 in den Kupplungskörper bzw. das nicht gezeichnete Kupplungsmaul einführt, insbesondere durch Rückwärtsstoßen des die Kupplung tragenden Zugfahrzeugs. Dieser Vorgang ergibt sich aus dem Übergang von Figur 19 nach Figur 20. Die Zugöse 618 stößt mit ihrem in Figur 19 vorderen Ende gegen den Auslösehebel 652 und der Auslösehebel 652 wird im Gegenzeigersinn aus seiner Kupplungsbereitschaftsstellung gemäß Figur 20 zurückgeschwenkt. Dabei nimmt der Auslöse hebel 652 über die Sperrklinke 675 in die Sperrast 677 eingreifend den Abstützhebel 646 im Gegenzeigersinn mit, so daß dieser mit der Abstützspitze 648 aus der Stützrast 649 ausrastet. Gleichzeitig nimmt der Auslösehebel 652 über die Sperrklinke 675 auch die Sperrungsunterdrückungsscheibe 678 mit, da ja die Sperrklinke 675 in die Zusatzrast 678c eingreift und an der Anlageflanke 678d anstößt. Sobald der Auslösehebel 652 nach vollständigem Einfahren der Zugöse 618 seine Betriebsstellung erreicht hat, kommen der Auslösehebel 652 und mit ihm die Sperrungsunterdrükkungsscheibe 678 zum Stillstand, wobei die Sperrungsunterdrükkungsscheibe 678 etwa die Stellung gemäß Figur 20 einnimmt. Der Abstützhebel 646 wird aber nun durch die Aufwerfhebelfeder 628 über den Aufwerfhebel 626 weiter im Gegenzeigersinn verschwenkt, bis er, ausgehend von der Stellung gemäß Figur 20, die Stellung gemäß Figur 16 wieder erreicht hat. Dabei wird nun mit zunehmender Annäherung des Abstützhebels 646 an die Stellung gemäß Figur 16 die Sperrklinke 675 wieder nach unten gedrückt, und zwar durch die Nockenwirkung der Kurvenabschnitte 677b und 677c. Spätestens dann, wenn der Abstützhebel 646 die Stellung gemäß Figur 16 wieder erreicht hat, ist die Sperrklinke 675 so weit nach unten zurückgedrängt, daß ihr oberes Ende 675a aus der Zusatzrast 678c vollständig herausgetreten ist und infolgedessen die Sperrungsunterdrückungsscheibe 678 unter der Wirkung der Feder 679 aus der Stellung gemäß Figur 20 wieder in die Stellung gemäß Figur 16 zurückspringen kann. Damit ist der Zustand gemäß Figur 16 wieder hergestellt.

Nachzutragen ist noch, daß in der Ausführungsform nach den Figuren 16 bis 22 ein zusätzliches Sicherungselement 680 vorgesehen ist, welches das obere Ende des Kupplungsbolzens 616 oder eine Stufe des oberen Endes des Kupplungsbolzens 616 in der Kupplungsstellung des Kupplungsbolzens übergreift.

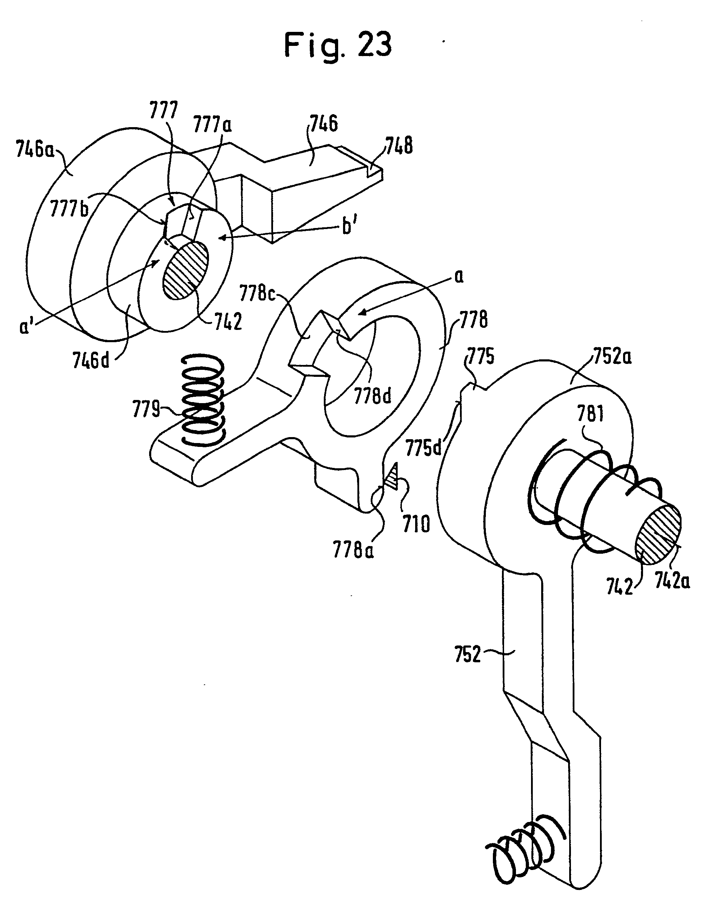

Die Ausführungsform nach Figur 23 entspricht vom Arbeitsprinzip her derjenigen nach den Figuren 16 bis 22. Analoge Teile sind mit den gleichen Bezugszeichen versehen, wie dort, jeweils vermehrt um die Zahl 100.

Das Sperrungsunterdrückungselement 778 ist hier als ein Sperrungsunterdrückungsring 778 ausgebildet, welcher auf einem Nabenfortsatz 746d der Abstützhebelnabe 746a drehbar gelagert ist. Der Rastvorsprung 775 erstreckt sich radial so weit über die Auslösehebelnabe 752a, daß er in axialer Richtung sowohl dem Fortsatz 746d der Abstützhebelnabe 746a als auch dem Sperrungsunterdrückungsring 778 gegenübersteht. Die Schraubendruckfeder 781 sucht die Auslösehebelnabe 752a gegen die Abstützhebelnabe 746a, d.h. gegen deren Fortsatz 746d und gegen den Sperrungsunterdrückungsring 778 anzudrücken.

In einem Zustand entsprechend demjenigen der Figur 16 liegt der Rastvorsprung 775 bei a an dem Sperrungsunterdrückungsring 778 an und bei a' an dem Fortsatz 746d. Die Feder 779 ist vorgespannt und drückt den Sperrungsunterdrückungsring 778 mit seiner Anschlagkante 778a gegen einen Teil des Kupplungskörpers 710. Bein Übergang in einen der Figur 17 entsprechenden Zustand dreht sich die Abstützhebelnabe 746a in Figur 23 im Gegenzeigersinn bei feststehendem Sperrungsunterdrückungsring 778. Die Sperrast 777 kann deshalb unter dem Rastvorsprung 775 vorbeidrehen, da dieser je durch die Anlage an dem Sperrungsunterdrückungsring 778 an der Stelle a an einem Hineinfallen in die Sperrast 777 gehindert ist.

Im Zustand der Figur 18 liegt der Rastvorsprung 775 nach wie vor an der Stelle a des Sperrungsunterdrückungsrings 778 an und an der Stelle b' des Nabenfortsatzes 746d. Die Stellung des Sperrungsunterdrückungsrings 778 ist unverändert.

In einem der Figur 19 entsprechenden Zustand hat sich der Auslösehebel 752 in Figur 23 im Gegenzeigersinn so weit gedreht, daß der Rastvorsprung 775 gleichzeitig in den Bereich der Sperrast 777 und der Zusatzrast 778c gelangt ist, so daß der Rastvorsprung 775 sowohl in die Sperrast 777 als auch in die Zusatzrast 778c axial unter der Wirkung der Schraubendruckfeder 781 hineingefallen ist.

Beim Übergang in einen der Figur 20 entsprechenden Zustand dreht sich die Auslösehebelnabe 752a im Uhrzeigersinn gemäß Figur 23 und nimmt dabei durch den Eingriff des Rastvorsprungs 775 in die Sperrflanke 777a der Sperrast 777 und in die Anlageflanke 778d der Zusatzrast 778c sowohl die Abstützhebelnabe 746a als auch den Sperrungsunterdrückungsring 778 im Uhrzeigersinn mit, wobei der Sperrungsunterdrückungsring 778 mit seiner Anschlagkante 778a von dem Kupplungskörper 710 abhebt und eine der Figur 20 entsprechende Stellung erreicht, wenn der Auslösehebel 752 seine der Figur 20 entsprechende Betriebsstellung erreicht. Dann ist der Abstützhebel 746 aus der in Figur 23 nicht eingezeichneten Stützrast herausgetreten und der Abstützhebel 746 wird durch die Wirkung einer wiederum nicht eingezeichneten, der Aufwerfhebelfeder 628 entsprechenden Feder im Uhrzeigersinn weitergedreht. Dabei kommt dann die nockenartig wirkende Fläche 777b an der Schrägflanke 775d des Rastvorsprungs 775 zur Anlage, so daß die Auslösehebelnabe 752a wieder gegen die Wirkung der Schraubendruckfeder 781 nach rechts zurückgedrückt wird. Sobald der Abstützhebel 746 seine der Figur 16 entsprechende Position erreicht hat, befindet sich der Rastvorsprung 775 wieder an der Stelle a' in Anlage an dem Nabenfortsatz 746d. Dann kann der Sperrungsunterdrückungsring 778 auch wieder in seine der Figur 16 entsprechende Position zurückspringen, d.h. der eingekuppelte Zustand entsprechend Figur 16 ist wieder erreicht.

**Ansprüche**

1. Anhängerkupplung umfassend
a) einen Kupplungskörper (10) ;
b) einen Kupplungsbolzen (16), welcher in dem Kupplungskörper (10) verschiebbar geführt ist zwischen einer Kupplungsstellung (Fig. 1) mit Durchgriff durch eine Zugöse (18) und einer das Ein- und Ausfahren der Zugöse (18) in den Kupplungskörper (10) bzw. aus dem Kupplungskörper gestattenden Nicht-Kupplungsstellung (Fig. 3) ;
c) einen an dem Kupplungskörper (10) schwenkbar gelagerten Aufwerfhebel (26), welcher durch erste Federmittel (28) in Richtung auf eine Sicherungsstellung (Fig. 1) gespannt ist, in welcher er den Kupplungsbolzen (16) in seiner Kupplungsstellung sichert, und entgegen der Wirkung der ersten Federmittel (28) unter Mitnahme des Kupplungsbolzens (16) in dessen Nicht-Kupplungsstellung in eine Haltestellung (Fig. 3) verschwenkbar und in dieser feststellbar ist, in welcher er den Kupplungsbolzen (16) in der Nicht-Kupplungsstellung hält ;
d) von außen betätigbare Betätigungsmittel (44, 42) zum Überführen des Aufwerfhebels (26) von der Sicherungsstellung (Fig. 1) in die Haltestellung (Fig. 3) und von der Haltestellung (Fig. 3) in die Sicherungsstellung (Fig. 1) ;
e) einen an dem Kupplungskörper (10) schwenkbar gelagerten Auslösehebel (52), welcher sich bei eingefahrener Zugöse (18) in einem Betriebsstellungsbereich (Fig. 1 und Fig. 2) befindet, in Richtung auf eine Lösebereitschaftsstellung (Fig. 4) vorgespannt ist und beim Ausfahren der Zugöse (18) aus dem Kupplungskörper (10) in die Lösebereitschaftstellung (Fig. 4) übergeht ;
f) Verbindungsmittel (52a, 64, 46a) zwischen dem Lösehebel (52) und dem Aufwerfhebel (26), welche
zum ersten bei eingefahrener Zugöse (Fig. 1) den Übergang des Aufwerfhebels (26) aus seiner Sicherungsstellung (Fig. 1) in seine Haltestellung (Fig. 3) unter Verbleib des Auslösehebels (52) in seinem Betriebsstellungsbereich (Fig. 1 bis Fig. 3) gestatten,
zum zweiten beim Ausfahren der Zugöse (18) den Übergang des Auslösehebels (52) aus seinem Betriebsstellungsbereich (Fig. 3) in seine Lösebereitschaftsstellung (Fig. 4) gestatten unter Verbleib des Aufwerfhebels (26) in seiner Haltestellung (Fig. 3 und Fig 4) und
zum dritten beim Überführen des Auslösehebels (52) aus seiner Lösebereitschaftstellung (Fig. 4) in seinen Betriebsstellungsbereich (Fig. 1) durch die einfahrende Zugöse (18) eine Freigabe des Aufwerfhebels (26) aus seiner Haltestellung (Fig. 5) bewirken, **dadurch gekennzeichnet,**
daß zwischen zwei relativ zueinander um eine gemeinsame Drehteilachse (42a) drehbaren und quer zu dieser Drehteilachse (42a) unbeweglichen Drehteilen (52a, 46a) der Verbindungsmittel (52a, 64, 46a) eine Freilaufmitnahmevorrichtung (64) vorgesehen ist, welche eine Relativdrehung der beiden Drehteile (52a, 46a) in einem ersten Relativdrehsinn (I) sperrt und eine Relativdrehung der beiden Drehteile (52a, 46a) in einem zweiten Relativdrehsinn (II) freigibt und daß der Freilaufmitnahmevorrichtung (64) eine kupplungszustandsabhängig gesteuerte Sperrungsunterdrückungsvorrichtung (66) zugeordnet ist, welche kupplungszustandsabhängig die Sperrung zwischen den beiden Drehteilen (52a, 46a) auch bei Relativdrehung im ersten Relativdrehsinn (I) unterdrückt,

wobei bei in Haltestellung befindlichem Aufwerfhebel (26), (Fig. 3 und 4), während des Übergangs des Auslösehebels (52) aus dem Betriebsstellungsbereich (Fig. 1 bis Fig. 3) in die Auslösebereitschaftsstellung (Fig. 4) die Relativdrehung der beiden Drehteile (52a, 46a) im zweiten Relativdrehsinn (II) erfolgt und daher freigegeben ist,

wobei weiter bei in Haltestellung befindlichem Aufwerfhebel (26) (Fig. 4) während des Übergangs des Löshebels (52) aus der Lösebereitschaftsstellung (Fig. 4) in den Betriebsstellungsbereich (Fig. 1) die Relativdrehung der beiden Drehteile (52a, 46a) im ersten Drehsinn (I) erfolgen müßte und daher mindestens zum Teil gesperrt wird (Fig. 5) und

wobei bei im Betriebsstellungsbereich befindlichem Auslösehebel (52) (Fig. 1 bis Fig. 3) während des Übergangs des Aufwerfhebels (26) aus der Sicherungsstellung (Fig. 1) in die Haltestellung (Fig. 3) die Sperrungsunterdrückungsvorrichtung (66) die Sperrung der Relativdrehung der beiden Drehteile (52a, 46a) im ersten Relativdrehsinn (I) aufhebt (Fig. 2).

2. Anhängerkupplung nach Anspruch 1, dadurch gekennzeichnet, daß einer (46a) der beiden Drehteile (52a, 46a) eine gerastete Umfangsfläche (64a) mit mindestens einer Sperrast (64b) aufweist und daß an dem anderen (52a) der beiden Drehteile (52a, 46a) eine Sperrklinke (64d) zum Eingriff in diese Sperrast (64b) gelagert und in Richtung auf Eingriff in die Sperrast vorgespannt ist.

3. Anhängerkupplung nach Anspruch 2, dadurch gekennzeichnet, daß die Sperrklinke (64d) an dem anderen (52a) der beiden Drehteile (52a, 46a) schwenkbar gelagert ist.

4. Anhängerkupplung nach Anspruch 1, dadurch gekennzeichnet, daß an einem (146a) der beiden Drehteile (146a, 152a) eine in Richtung der Drehteilachse (142a) im wesentlichen axial gerichtete, gerastete Stirnfläche (146c) mit mindestens einer Sperrast (164b) vorgesehen ist und daß an dem anderen (152a) der beiden Drehteile (146a, 152a) mindestens ein Rastvorsprung (164d) angebracht ist, welcher in Richtung auf Eingriff in die Sperrast (164b) vorgespannt ist.

5. Anhängerkupplung nach Anspruch 4, dadurch gekennzeichnet, daß der Rastvorsprung (164d) an dem anderen (152a) der beiden Drehteile (146a, 152a) starr angebracht ist und daß die beiden Drehteile in Achsrichtung der Drehteilachse (142a) gegeneinander relativ verschiebbar und gegeneinander vorgespannt sind.

6. Anhängerkupplung nach einem der Ansprüche 1 bis 5, dadurch gekennzeichnet, daß der Aufwerfhebel (326) auf einer Betätigungswelle (324), welche die Drehteilachse (324a) definiert, im wesentlichen drehfest angeordnet ist, daß der Lösehebel (352) auf dieser Betätigungswelle (324) drehbar gelagert ist und daß die Freilaufmitnahmevorrichtung (364) zwischen der Betätigungswelle (324) oder dem Aufwerfhebel (326) einerseits und dem Auslösehebel (352) andererseits angeordnet ist.

7. Anhängerkupplung nach Anspruch 6, dadurch gekennzeichnet, daß die Freilaufmitnahmevorrichtung zwischen je einer Nabe (326a, 352a) des Aufwerfhebels (326) und des Auslösehebels (352) angeordnet ist.

8. Anhängerkupplung nach einem der Ansprüche 6 und 7, dadurch gekennzeichnet, daß die Sperrungsunterdrückungsvorrichtung (366) in Abhängigkeit von der Stellung des Aufwerfhebels (326) oder der Betätigungswelle (324) gesteuert ist.

9. Anhängerkupplung nach einem der Ansprüche 6 und 7, dadurch gekennzeichnet, daß die Sperrungsunterdrückungsvorrichtung (366) in Abhängigkeit von der Stellung des Auslösehebels (352) gesteuert ist.

10. Anhängerkupplung nach einem der Ansprüche 6 und 7, dadurch gekennzeichnet, daß die Sperrungsunterdrückungsvorrichtung (466) in Abhängigkeit von einer Kraftbeaufschlagung der Betätigungsmittel (442) im Sinne der Überführung des Aufwerfhebels (26) von der Sicherungsstellung (Fig. 1) in die Haltestellung (Fig. 3) gesteuert ist.

11. Anhängerkupplung nach einem der Ansprüche 6 bis 10, dadurch gekennzeichnet, daß der Aufwerfhebel (326) und der Kupplungsbolzen (316) mit je einer Halterastfläche (343, 338) ausgeführt sind, welche in der Haltestellung ineinander einrasten.

12. Anhängerkupplung nach einem der Ansprüche 1 bis 5, dadurch gekennzeichnet, daß auf einer Betätigungswelle (42), welche die Drehteilachse (42a) definiert, ein Abstützhebel (46) im wesentlichen unverdrehbar angeordnet ist und der Auslösehebel (52) auf dieser Betätigungswelle (42) drehbar gelagert ist, daß der Aufwerfhebel (26) um eine zur Drehteilachse (42a) parallele Aufwerfhebelachse (24a) drehbar gelagert ist, daß der Abstützhebel (46) eine Mitnahme- und Abstützspitze (48) aufweist, welche zum Überführen des Aufwerfhebels (26) aus der Sicherungsstellung (Fig. 1) in die Haltestellung (Fig. 3) über eine Mitnahmekante (50) des Aufwerfhebels (26) gleitet und in der Haltestellung (Fig. 3) in eine Stützrast (49) des Aufwerfhebels (26) einrastet, und daß die Freilaufmitnahmevorrichtung (64) zwischen dem Abstützhebel (52) oder der Betätigungswelle (42) einerseits und dem Auslösehebel (52) andererseits vorgesehen ist.

13. Anhängerkupplung nach Anspruch 12, dadurch gekennzeichnet, daß die Freilaufmitnahmevorrichtung (54) zwischen einer Nabe (46a) des Abstützhebels (46) und einer Nabe (52a) des Auslösehebels (52) vorgesehen ist.

14. Anhängerkupplung nach einem der Ansprüche 12 oder 13, dadurch gekennzeichnet, daß die Sperrungsunterdrückungsvorrichtung (66) in Abhängigkeit von der Stellung des Aufwerfhebels (26) gesteuert ist.

15. Anhängerkupplung nach Anspruch 12 oder 13, dadurch gekennzeichnet, daß die Sperrungsunterdrückungsvorrichtung (166) in Abhängigkeit von der Stellung des Abstützhebels (146) gesteuert ist.

16. Anhängerkupplung nach Anspruch 12 oder 13, dadurch gekennzeichnet, daß die Sperrungsunterdrückungsvorrichtung (266) in Abhängigkeit von der Stellung des Auslösehebels (252) gesteuert ist.

17. Anhängerkupplung nach einem der Ansprüche 12 oder 13, dadurch gekennzeichnet, daß die Sperrungsunterdrückungsvorrichtung (466) in Abhängigkeit von einer Kraftbeaufschlagung der Betätigungsmittel (444, 442) im Sinne der Überführung des Aufwerfhebels (26) von der Sicherungsstellung (Fig. 1) in die Haltestellung (Fig. 4) gesteuert ist.

18. Anhängerkupplung nach einem der Ansprüche 1 bis 17, dadurch gekennzeichnet, daß ein die Sperrungsunterdrückungsvorrichtung (66) steuernder um die Drehteilachse (42a) oder eine dazu parallele Achse (24a) drehbarer Kupplungsteil (26) einen Sperrungsunterdrückungsnocken (66b) trägt.

19. Anhängerkupplung nach einem der Ansprüche 1 bis 17, dadurch gekennzeichnet, daß ein die Sperrungsunterdrückungsvorrichtung (166) steuerndes um die Drehteilachse (142a) oder eine dazu parallele Achse drehbarer Kupplungsteil (146) einen im wesent lichen parallel zur Drehteilachse (142a) verschiebbaren Sperrungsunterdrückungsschieber (166h) trägt, welcher mit einer am Kupplungskörper (110) angeordneten Nockenbahn (146m) in Eingriff steht.

20. Anhängerkupplung nach einem der Ansprüche 1 bis 17, dadurch gekennzeichnet, daß ein die Sperrungsunterdrückungsvorrichtung (266) steuernder, um die Drehteilachse (242a) oder eine dazu parallele Achse, drehbarer Kupplungsteil (252) in Richtung der jeweiligen Achse (242a) beweglich ist und im Zuge einer Drehbewegung um seine jeweilige Achse (242a) durch Eingriff mit einer am Kupplungskörper (210) angeordneten Führungskante (266r) in Richtung der jeweiligen Achse (242a) verschiebbar ist.

21. Anhängerkupplung nach Anspruch 20, dadurch gekennzeichnet, daß der Auslösehebel (252) eine Bohrung (211) eines Schenkels (210a) des gabelförmig ausgebildeten Kupplungskörpers (210) mit Drehspiel durchdringt und daß der Rand dieser Bohrung als Führungskante (266r) ausgebildet ist.

22. Anhängerkupplung nach Anspruch 21, dadurch gekennzeichnet, daß der Querschnitt des Auslösehebels (252) an der Stelle des Durchtritts durch die Bohrung (211) länglich und gegen einer zu seiner Drehachse normale Ebene verschränkt ist.

23. Anhängerkupplung nach einem der Ansprüche 2 bis 17, dadurch gekennzeichnet, daß der die Sperrast (464b) aufnehmende Drehteil (446a) von zwei relativ zueinander winkelbeweglichen Drehteilelementen (446aI, 446aII) gebildet ist, deren jedes einen Sperrastabschnitt (464bI, 464bII) aufweist, wobei diese Sperrastabschnitte (464bI, 464bII) in einer ersten Relativwinkellage (Fig. 13) der beiden Drehteilelemente (446aI, 446aII) aneinander anschließen derart, daß sie einer ihnen gemeinsamen Sperrklinke bzw. einem ihnen gemeinsamen Sperrvorsprung (464d) an dem jeweils anderen Drehteil (452a) Eintritt gewähren und in einer zweiten Relativwinkellage (Fig. 14) der beiden Drehteilelemente (446aI, 446aII) gegeneinander versetzt sind derart, daß die ihnen gemeinsame Sperrklinke bzw. der Sperrvorsprung (464d) in keinen der Sperrastabschnitte (464bI, 464bII) eintreten kann.

24. Anhängerkupplung nach Anspruch 23, dadurch gekennzeichnet, daß das eine (446 aI) der Drehteilelemente auf einer den Betätigungsmitteln zugehörigen Betätigungswelle (442) unverdrehbar und das andere (446 aII) der beiden Drehteilelemente auf der Betätigungswelle (442) beschränkt winkelbeweglich angeordnet ist, daß zwischen den beiden Drehteilelementen (446aI, 446aII) eine Spielbeseitigungsfeder (446aa) angeordnet ist, welche die beiden Drehteilelemente (446aI, 446aII) in die erste Relativwinkellage (Fig. 1) zu drehen sucht, und daß das andere (446aII) der beiden Drehteilelemente der gegenüber der Wirkung der Spielbeseitigungsfederung (446aa) stärkeren Wirkung der ersten Federungsmittel (P 428) unterworfen ist derart, daß bei einer Drehmomentbeaufschlagung der Betätigungswelle (442) im Sinne der Überführung des Aufwerfhebels (26) von der Sicherungsstellung (Fig. 1) in die Haltestellung (Fig. 4) die beiden Drehteilelemente (446aI, 446aII) in die zweite Relativwinkellage (Fig. 14) treten.

25. Anhängerkupplung nach einem der Ansprüche 1 bis 24, dadurch gekennzeichnet, daß die beiden relativ zueinander drehbaren Drehteile (152a, 146a) je einen radialen Fortsatz (152, 146) aufweisen, von denen mindestens einer (146) in einer die Drehteilachse (142a) enthaltenden Ebene derart gekröpft ist, daß die beiden Fortsätze (152, 146) annähernd in einer gemeinsamen zur Drehteilachse (142a) normalen Ebene liegen.

26. Anhängerkupplung nach einem der Ansprüche 5 bis 25, dadurch gekennzeichnet, daß der Rastvorsprung (464d) und die Sperrrast (464b) mit Hinterschneidungen (464da, 464ba) ausgeführt sind, welche ein unbeabsichtigtes Abheben der beiden Drehteile (446a, 452a) voneinander verhindern.

27. Anhängerkupplung nach einem der Ansprüche 24 bis 26, dadurch gekennzeichnet, daß das zur Überführung der beiden Drehteilelemente (446aI, 446aII) aus der ersten Relativwinkellage (Fig. 13) in die zweite Relativwinkellage (Fig. 14) vorhandene Winkelspiel einen Vorlauf der Betätigungswelle (442) vor dem Beginn der Bewegung des Aufwerfhebels aus seiner Sicherungsstellung (Fig. 1) in Richtung seiner Haltestellung (Fig. 4) gestattet und daß dieser Vorlauf zur Ansteuerung eines Steuerungselements (474, 574) dient, welches bei Vorhandensein eines die Zugöse (18) gegen den Kupplungsbolzen (16) andrückenden Kraftgeräts (572) die Kraftwirkung dieses Kraftgeräts (572) aufhebt, bevor die Bewegung des Aufwerfhebels (26) durch die Betätigungswelle (442) eingeleitet wird.

28. Anhängerkupplung nach einem der Ansprüche 2, 3, 6, 7, 11, 12, 13, 25, dadurch gekennzeichnet, daß um die gemeinsame Drehteilachse (642a) ein Sperrungsunterdrückungselement (678) drehbar gelagert ist, daß dieses Sperrungsunterdrückungselement (678) in Richtung auf eine Sperrungsunterdrückungsstellung (Figuren 16, 17, 18, 19) vorgespannt ist, in welcher es bei im Betriebsstellungsbereich befindlichem Auslösehebel (652) während des Übergangs des Aufwerfhebels (626) aus seiner Sicherungsstellung (Figur 16) in seine Haltestellung (Figur 18) die Sperrklinke (675) in Außereingriffsstellung zur Sperrast (677) hält, daß an dem Sperrungsunterdrückungselement (678) eine Zusatzrast (678c) angebracht ist, in welche die Sperrklinke (675) annähernd gleichzeitig mit dem Einfallen in die Sperrast (677) (Figur 19) einfällt, wenn der Auslösehebel (652) bei in Haltestellung befindlichem Aufwerfhebel (626) aus seinem Betriebsstellungsbereich (Figuren 16 bis 18) in seine Auslösebereitschaftsstellung (Figur 19) übergeht, so daß beinachfolgender Rückkehr des Auslösehebels (652) aus der Auslösebereitschaftsstellung (Figur 19) in den Betriebsstellungsbereich (Figur 20) das Sperrungsunterdrückungselement (678) entgegen seiner Vorspannung (679) durch die Sperrklinke (675) aus der Sperrungsunterdrückungsstellung ausgerückt wird, und daß zur Rückführung der Sperrklinke (675) in ihre Aussereingriffsstellung eine Sperrklinkenrückführungskurve (677b, 677c) vorgesehen ist, welche bei der Rückkehr des Aufwerfhebels (626) aus der Haltestellung (Figur 19) in die Sicherungsstellung (Figur 16) wirksam werdend die Sperrklinke (675) in ihre Außereingriffsstellung (Fig. 1) zurückführt, nachdem der Auslösehebel (652) in Richtung auf seinen Betriebsstellungsbereich (Figur 1) zurückgestellt worden ist, so daß dann das Sperrungsunterdrückungselement (678) unter der Wirkung seiner Vorspannung (679) wieder in seine Sperrungsunterdrückungsstellng (Figur 1) treten kann.

29. Anhängerkupplung nach einem der Ansprüche 4, 5, 6, 7, 11, 12, 13, 25, dadurch gekennzeichnet, daß um die gemeinsame Drehteilachse (742a) ein Sperrungsunterdrükkungselement (778) drehbar gelagert ist, daß dieses Sperrungsunterdrückungselement (778) in Richtung auf eine Sperrungsunterdrückungsstellung (Figur 23) vorgespannt ist, in welcher es bei im Betriebsstellungsbereich befindlichem Auslösehebel (752) während des Übergangs des Aufwerfhebels aus seiner Sicherungsstellung in seine Haltestellung den Rastvorsprung (775) in Aussereingriffsstellung hält, daß an dem Sperrungsunterdrückungselement (778) eine Zusatzrast (778c) angebracht ist, in welche der Rastvorsprung (775) annähernd gleichzeitig mit dem Einfallen in die Sperrast (777) einfällt, wenn der Auslösehebel (752) bei in Haltestellung befindlichem Aufwerfhebel aus seinem Betriebsstellungsbereich in seine Auslösebereitschaftsstellung übergeht, so daß beinachfolgender Rückkehr des Auslösehebels (752) aus der Auslösebereitschaftsstellung in den Betriebsstellungsbereich das Sperrungsunterdrückungselement (778) entgegen seiner Vorspannung (779) durch den Rastvorsprung (775) aus der Sperrungsunterdrückungsstellung ausgerückt wird, und daß zur Rückführung des Rastvorsprungs (775) in seine Außereingriffsstellung eine Rastvorsprungrückführfläche (777b) vorgesehen ist, welche bei der Rückkehr des Aufwerfhebels aus der Haltestellung in die Sicherungsstellung wirksam werdend den Rastvorsprung (775) in Außereingriffsstellung zurückführt, nachdem der Auslösehebel (752) in Richtung auf seinen Betriebsstellungsbereich zurückgegangen ist, so daß dann das Sperrungsunterdrückungselement (778) unter der Wirkung seiner Vorspannung (779) wieder in seine Sperrungsunterdrückungsstellung treten kann.

## Claims

1. Trailer coupling, comprising
   a) a coupling body (10) ;
   b) a coupling pin (16), which is slidably guided in the coupling body (10) between a coupling position (Fig. 1) where it passes through a pulling eye (18) and a non-coupling position (Fig. 3) permitting the entry of the pulling eye (18) into, and its exit from, the coupling body (10) ;
   c) a lifting lever (26), pivotally journalled on the coupling body (10), which is biased by first spring means (28) towards a securing position (Fig. 1), in which it secures the coupling pin (16) in its coupling position, and can be pivoted against the action of the first spring means (28) into a holding position (Fig. 3), entraining the coupling pin (16) into its non-coupling position, and can be secured in this holding position, in which it holds the coupling pin (16) in the non-coupling position ;
   d) actuating means (44, 42), able to be actuated from outside, for moving the lifting lever (26) from the securing position (Fig. 1) into the holding position (Fig. 3) and from the holding position (Fig. 3) into the securing position (Fig. 1) ;
   e) a release lever (52), pivotally journalled on the coupling body (10), which, when the pulling eye (18) has entered, is situated in an operation position range (Fig. 1 and Fig. 2), is prestressed towards a release readiness position (Fig. 4) and, when the pulling eye (18) moves out of the coupling body (10), moves into the release readiness position (Fig. 4) ;

f) connecting means (52a, 64, 46a) between the release lever (52) and the lifting lever (26), which firstly, when the pulling eye (Fig. 1) has entered, permit the movement of the lifting lever (26) from its securing position (Fig. 1) into its holding position (Fig. 3), while leaving the release lever (52) in its operating position range (Fig. 1 to Fig. 3), secondly, when the pulling eye (18) has moved out, permit the movement of the release lever (52) from its operating position range (Fig. 3) into its release readiness position (Fig. 4), while leaving the lifting lever (26) in its holding position (Fig. 3 and Fig. 4) and thirdly, when the release lever (52) has been moved by the entering pulling eye (18) out of its release readiness position (fig. 4) into its operating position range (Fig. 1), cause a freeing of the lifting lever (26) out of its holding position (Fig. 5),

characterised in that,

between two rotatable parts (52a, 46a) of the connecting means (52a, 64, 46a), which are rotatable relative to each other about a common axis (42a) of rotation and immovable transversely to this axis (42a), a freewheel entraining device (64) is provided, which blocks a relative rotation of the two rotatable parts (52a, 46a) in a first relative rotational direction (I) and allows a relative rotation of the two rotatable parts (52a, 46a) in a second relative rotational direction (II), and that with the freewheel entraining device (64) a blocking suppression device (66), controlled as a function of coupling condition, is associated, which suppresses the blocking between the two rotatable parts (52a, 46a) as a function of coupling condition for the relative rotation also in the first relative rotational direction (I),

wherein, when the lifting lever (26) is in the holding position (Figures 3 and 4), during the movement of the release lever (52) from the operating position range (Fig. 1 to Fig. 3) into the release readiness position (Fig. 4), the relative rotation of the two rotatable parts (52a, 46a) takes place in the second relative rotational direction (II) and therefore is allowed, wherein, furthermore, when the lifting lever (26) is in the holding position (Fig. 4), during the movement of the release lever (52) from the release readiness position (Fig. 4) into the operating position range, (Fig. 1), the relative rotation of the two rotatable parts (52a, 46a) would have to take place in the first rotational direction (I) and therefore is at least partly blocked (Fig. 5) and

wherein, when the release lever (52) is in the operating position range (Fig. 1 to Fig. 3), during the movement of the lifting lever (26) out of the securing position (Fig. 1) into the holding position (Fig. 3), the blocking suppression device (66) cancels out the blocking of the relative rotation of the two rotatable parts (52a, 46a) in the first relative rotational direction (I) (Fig. 2).

2. Trailer coupling according to Claim 1, characterized in that one (46a) of the two rotatable parts (52a, 46a) possesses a notched peripheral surface (64a) having at least one blocking detent (64b) and that, on the other (52a) of the two rotatable parts (52a, 46a), a blocking pawl (64d) for engagement into this detent (64b) is journalled and is prestressed in the direction of engagement into the blocking detent.

3. Trailer coupling according to Claim 2, characterized in that the blocking pawl (64d) is pivotally journalled on the other (52a) of the two rotatable components (52a, 46a).

4. Trailer coupling according to Claim 1, characterized in that, on one (146a) of the two rotatable parts (146a, 152a), a notched detent surface (146c), orientated substantially axially towards the rotatable parts axis (142a) and having at least one blocking detent (164b) is provided, and that, on the other (152a) of the two rotatable parts (146a, 152a) at least one detent projection (164d) is provided, which is prestressed in the direction of engagement into the blocking detent (164b).

5. Trailer coupling according to Claim 4, characterized in that the detent projection (164d) is rigidly mounted on the other (152a) of the two rotatable parts (146a, 152a) and that the two rotatable parts are displaceable relative to each other in the axial direction of the rotatable parts axis (142a) and are prestressed towards each other.

6. Trailer coupling according to one of Claims 1 to 5, characterized in that the lifting lever (326) is basically torsionally locked on an actuating shaft (324), which defines the rotatable parts axis (324a), that the release lever (352) is rotatably journalled on this actuating shaft (324), and that the freewheel entraining device (364) is disposed between the actuating shaft (324) or the lifting lever (326), on the one hand, and the release lever (352), on the other hand.

7. Trailer coupling according to Claim 6, characterized in that the freewheel entraining device is disposed between a hub each (326a, 352a) of the lifting lever (326) and of the release lever (352).

8. Trailer coupling according to one of Claims 6 and 7, characterized in that the blocking suppression device (366) is controlled as a function of the position of the lifting lever (326) or of the actuating shaft (324).

9. Trailer coupling according to one of Claims 6 and 7, characterized in that the blocking suppression device (366) is controlled as a function of the position of the release lever (352).

10. Trailer coupling according to one of Claims 6 and 7, characterized in that the blocking suppression device (466) is controlled as a function of a force loading of the actuating means (442) in the sense of moving the lifting lever (26) from the securing position (Fig. 1) into the holding position (Fig. 3).

11. Trailer coupling according to one of Claims 6 to 10, characterized in that the lifting lever (326) and the coupling pin (316) are each constructed with one holding detent surface (343, 338), which engage one another in the holding position.

12. Trailer coupling according to one of Claims 1 to 5, characterized in that, on an actuating shaft (42) which defines the rotatable parts axis (42a), a support lever (46) is mounted basically locked against rotation and the release lever (52) is rotatably journalled on this actuating shaft (42), that the lifting lever (26) is rotatably journalled about a lifting lever axis (24a) parallel to the rotatable parts axis (42a), that the support lever (46) possesses an entraining and support tip (48) which, for moving the lifting lever (26) from the securing position (Fig. 1) into the holding position (Fig. 3), slides along an entraining edge (50) of the lifting lever (26) and, in the holding position (Fig. 3), engages into a support detent (49) of the lifting lever (26), and that the freewheel entraining device (64) is provided between the support lever (52) or the actuating shaft (42), on the one hand, and the release lever (52), on the other hand.

13. Trailer coupling according to Claim 12, characterized in that the freewheel entraining device (64) is provided between a hub (46a) of the support lever (46) and a hub (52a) of the release lever (52).

14. Trailer coupling according to one of Claims 12 or 13, characterized in that the blocking suppression device (66) is controlled as a function of the position of the lifting lever (26).

15. Trailer coupling according to Claim 12 or 13, characterized in that the blocking suppression device (166) is controlled as a function of the position of the support lever (146).

16. Trailer coupling according to Claim 12 or 13, characterized in that the blocking suppression device (266) is controlled as a function of the position of the release lever (252).

17. Trailer coupling according to one of Claims 12 or 13, characterized in that the blocking suppression device (466) is controlled as a function of a force loading of the actuating means (444, 442) in the direction of moving the lifting lever (26) from the securing position (Fig. 1) into the holding position (Fig. 4).

18. Trailer coupling according to one of Claims 1 to 17, characterized in that a coupling component (26), controlling the blocking suppression device (66) and rotatable about the rotatable parts axis (42a) or an axis (24a) parallel thereto, carries a blocking suppression cam (66b).

19. Trailer coupling according to one of Claims 1 to 17, characterized in that a coupling component (146), controlling the blocking suppression device (166) and rotatable about the rotatable parts axis (142a) or an axis parallel thereto, carries a blocking suppression slider (166h), displaceable basically parallel to the rotatable parts axis (142a), which (slider) is in engagement with a cam track (146m) disposed on the coupling body (110).

20. Trailer coupling according to one of Claims 1 to 17, characterized in that a coupling component (252), controlling the blocking suppression device (266) and rotatable about the rotatable parts axis (242a) or an axis parallel thereto, is movable in the direction of the relevant axis (242a) and, in the course of a rotational movement about its relevant axis (242a), is displaceable in the direction of this axis (242a) by engagement with a guide edge (266r) disposed on the coupling body (210).

21. Trailer coupling according to Claim 20, characterized in that the release lever (252) passes with rotational clearance through a bore (211) of one arm (210a) of the fork-shaped coupling body (210), and that the edge of this bore is formed as the guide edge (266r).

22. Trailer coupling according to Claim 21, characterized in that the cross-section of the release lever (252), at the position of its passage through the bore (211), is elongate and is twisted relative to a plane perpendicular to its axis of rotation.

23. Trailer coupling according to one of Claims 2 to 17, characterized in that the rotatable part (446a) comprising the blocking detent (464b) is composed of two rotatable part elements (446aI, 446aII), angularly rotatable relative to each other, each of which possesses a blocking detent portion (464bI, 464bII), these blocking detent portions (464bI, 464bII) adjoining one another in a first relative angular position (Fig. 13) of the two rotatable part elements (446aI, 446aII) in such a manner that they permit entry of a blocking pawl common to them or a blocking projection (464d) common to them on the other rotatable part (452a) and, in a second relative angular position (Fig. 14) of the two rotatable part elements (446aI, 446aII), are offset from each other in such a manner that the blocking pawl or blocking projection (464d) common to them cannot enter into any of the blocking detent portions (464bI, 464bII).

24. Trailer coupling according to Claim 23, characterized in that the one (446aI) of the rotatable part elements is torsionally locked on an actuating shaft (442) belonging to the actuating means and the other (446aII) of the two rotatable part elements is mounted with limited angular mobility on the actuating shaft (442), that a play eliminating spring mechanism (446aa) is disposed between the two rotatable part elements (446aI, 446aII), which (spring mechanism) attempts to rotate the two rotatable part elements (446aI, 446aII) into the first relative angular position (Fig. 1), and that the other (446aII) of the rotatable part elements is subjected to the action of the first spring means (P 428), stronger than the action of the play-eliminating spring mechanism (446aa), in such a manner that, when a torque acts upon the actuating shaft (442) in the sense of moving the lifting lever (26) from the securing position (Fig. 1) into the holding position (Fig. 4), the two rotatable part elements (446aI, 446aII) come into the second relative angular position (Fig. 14).

25. Trailer coupling according to one of Claims 1 to 24, characterized in that the two relatively rotatable parts (152a, 146a) each have a radial projection (152, 146), of which at least one (146) is cranked in a plane containing the rotatable parts axis (142a) in such a manner that the two projections (152, 146) lie approximately in one common plane, perpendicular to the rotatable parts axis (142).

26. Trailer coupling according to one of Claims 5 to 25, characterized in that the detent projection (464d) and the blocking detent (464b) are each constructed with back-cuts (464da, 464ba), which prevent unintentional separation of the two rotatable parts (446a, 452a) from each other.

27. Trailer coupling according to one of Claims 24 to 26, characterized in that the angular play present for moving the two rotatable part elements (446aI, 446aII) from the first relative angular position (Fig. 13) into the second relative angular position (Fig. 14) makes possible an advance of the actuating shaft (442) before commencement of the movement of the lifting lever from its securing position (Fig. 1) towards its holding position (Fig. 4), and that this advance serves for governing a control element (474, 574), which, when a force device (572) which presses the pulling eye (18) against the coupling pin (16) is present, cancels out the force action of this force device (572) before the movement of the lifting lever (26) is initiated by the actuating shaft (442).

28. Trailer coupling according to one of Claims 2, 3, 6, 7, 11, 12, 13, 25, characterized in that a blocking suppression element (678) is rotatably journalled about the common rotatable parts axis (642a), that this blocking suppression element (678) is prestressed towards a blocking suppression position (Figures 16, 17, 18, 19), in which, when the release lever (652) is situated in the operating position range, the blocking suppression element, during the movement of the lifting lever (626) from its securing position (Fig. 16) into its holding position (Fig. 18), holds the blocking pawl (675) in the disengagement position from the blocking detent (677), that on the blocking suppression element (678) an additional detent (678c) is provided, into which the blocking pawl (675) engages approximately simultaneously with its engagement into the blocking detent (677) (Fig. 19), if the release lever (652) is moving out of its operating position range (Figures 16 to 18) into its release readiness position (Fig. 19) when the lifting lever (626) is situated in the holding position, so that in a subsequent return of the release lever (652) from the release readiness position (Fig. 19) into the operating position range (Fig. 20), the blocking suppression element (678) is disengaged, in opposition to its prestress (679), by the blocking pawl (675) out of the blocking suppression position, and that, for restoring the blocking pawl (675) into its disengagement position, a blocking pawl return guidance curve (677b, 677c) is provided, which, in the return of the lifting lever (626) out of the holding position (Fig. 19) into the securing position (Fig. 16), becoming active returns the blocking pawl (675) into its disengagement position (Fig. 1), after the release lever (652) has been brought back towards its operating position range (Fig. 1), so that the blocking suppression element (678) can then again come into its blocking suppression position (Fig. 1) under the action of its prestress (679).

29. Trailer coupling according to one of Claims 4, 5, 6, 7, 11, 12, 13, 25, characterized in that a blocking suppression element (778) is rotatably journalled about the common rotatable parts axis (742a), that this blocking suppression element (778) is prestressed towards a blocking suppression position (Fig. 23), in which, when the release lever (752) is situated in the operating position range, the blocking suppression element holds the detent projection (775) in the disengagement position during the movement of the lifting lever from its securing position into its holding position, that on the blocking suppression element (778) an additional detent (778c) is provided, into which the detent projection (775) engages approximately simultaneously with its engagement into the blocking detent (777), if the release lever (752) moves from its operating position range into its release readiness position when the lifting lever is situated in the holding position, so that, in a succeeding return of the release lever (752) from the release readiness position into the operating position range, the blocking suppression element (778) is disengaged, in opposition to its prestress (779), by the detent projection (775) out of the blocking suppression position, and that, for returning the detent projection (775) into its disengagement position, a detent projection return guide surface (777b) is provided which, on the return of the lifting lever from the holding position into the securing position, becoming active returns the detent projection (775) into the disengagement position, after the release lever (752) has moved back towards its operating position range, so that the blocking suppression element (778) can then return again into its blocking suppression position under the action of its prestress (779).

## Revendications

1. Attelage de remorque comportant

a) un corps d'attelage (10) ;

b) un boulon d'attelage (16) qui est guidé coulissant dans le corps d'attelage (10), entre une position d'attelage (fig. 1) avec passage à travers un oeillet de traction (18) et une position de dételage, autorisant l'introduction et l'extraction de l'oeillet de traction (18) dans le corps d'attelage (10) ou hors de celui-ci (fig. 3) ;

c) un levier de relevage (26), monté pivotant sur le corps d'attelage (10), qui par des premiers moyens de ressort (28) est serré en direction d'une position de blocage (fig. 1) dans laquelle il bloque le boulon d'attelage (16) dans sa position d'attelage et qui, à l'encontre de l'effet des premiers moyens de ressort (28), par entraînement du boulon d'attelage (16) dans sa position de dételage, peut être pivoté et fixé dans une position de maintien (fig. 3) dans laquelle il maintient le boulon d'attelage (16) dans la position de dételage ;

d) des moyens d'actionnement (44, 42), actionnables de l'extérieur en vue de faire passer le levier de relevage (26) de la position de blocage (fig. 1) a la position de maintien (fig. 3) et de la position de maintien (fig. 3) à la position de blocage (fig. 1) ;

e) un levier de déclenchement (52), monté pivotant sur le corps d'attelage (10), qui, lorsque l'oeillet de traction (18) est en position introduite, se trouve dans une zone de position de fonctionnement (fig. 1 et fig. 2), est précontraint en direction d'une position de préparation de déclenchement (fig. 4) et passe dans la position de préparation de déclenchement (fig. 4), lorsque l'oeillet de traction (18) est extrait du corps d'attelage (10) ;

f) des moyens de liaison (52a, 64, 46a) entre le levier de déclenchement (52) et le levier de relevage (26), qui

premièrement, autorisent le passage du levier de relevage (26) de sa position de blocage (fig. 1) dans sa position de maintien (fig. 3), lorsque l'oeillet de traction est introduit (fig. 1), le levier de déclenchement (52) restant dans sa zone de position de fonctionnement (fig. 1 à fig. 3),

deuxièmement, autorisent le passage du levier de déclenchement (52) de sa zone de position de fonctionnement (fig. 3) dans sa position de préparation de déclenchement (fig. 4), lors de l'extraction de l'oeillet de traction (18), le levier de relevage (26) restant dans sa position de maintien (fig. 3 et fig. 4) et

troisièmement, entraînent, lors du passage du levier de déclenchement (52) de sa position de préparation de déclenchement (fig. 4) dans sa zone de position de fonctionnement (fig. 1), une libération du levier de relevage (26) de sa position de maintien (fig. 5), par l'introduction de l'oeillet de traction (18),

caractérisé en ce

qu'il est prévu, entre deux éléments de rotation (52a, 46a), des moyens de liaison (52a, 64, 46a) tournant l'un par rapport à l'autre autour d'un axe d'élément de rotation (42a) commun et immobiles transversalement à cet axe d'élément de rotation (42a), un dispositif d'entraînement en roue libre qui empêche une rotation relative des deux éléments de rotation (52a, 46a) dans un premier sens de rotation relative (I) et autorise une rotation relative des deux éléments de rotation (52a, 46a) dans un deuxième sens de rotation relative (II) et en ce qu'au dispositif d'entraînement en roue libre (64) est associé un dispositif de suppression de blocage (66), commandé en fonction de l'état d'attelage, qui supprime le blocage, en fonction de l'état d'attelage, entre les deux éléments de rotation (52a, 46a), même dans le cas d'une rotation relative dans le premier sens de rotation relative (I),

la rotation relative des deux éléments de rotation (52a, 46a) s'effectuant dans le deuxième sens de rotation relative (II) et étant donc autorisée, alors que le levier de relevage (26) se trouve en position de maintien (fig. 3 et 4), pendant le passage du levier de déclenchement (52) de la zone de position de fonctionnement (fig. 1 à fig. 3) à la position de préparation de déclenchement (fig. 4),

la rotation relative des deux éléments de rotation (52a, 46a) devant s'effectuer dans le premier sens de rotation (I) et étant donc bloquée, au moins en partie (fig. 5), alors que le levier de relevage (26) se trouve en position de maintien (fig. 4), pendant le passage du levier de déclenchement (52) (fig. 4) à la zone de position de fonctionnement (fig. 1) et

le dispositif de suppression de blocage (66) supprimant le blocage de la rotation relative des deux éléments de rotation (52 à 46a) dans le premier sens de rotation relative (I) (fig. 2), alors que le levier de déclenchement (52) se trouve dans la zone de position de fonctionnement (fig. 1 à fig. 3), pendant le passage du levier de relevage (26) de la position de blocage (fig. 1) à la position de maintien (fig. 3).

2. Attelage de remorque selon la revendication 1, caractérisé en ce que l'un (46a) des deux éléments de rotation (52a, 46a) présente une surface périphérique (64) crantée avec au moins un cran de blocage (64b) et en ce que sur l'autre (52a) des deux éléments de rotation (52a, 46a) est montée une lame de blocage (64d) et qui est précontrainte dans le sens de l'engagement dans le cran de blocage.

3. Attelage de remorque selon la revendication 2, caractérisé en ce que la lame de blocage (64d) est montée pivotante sur l'autre (52a) des deux éléments de rotation (52a, 46a).

4. Attelage de remorque selon la revendication 1, caractérisé en ce qu'il est prévu sur l'un (146a) des deux éléments de rotation (146a, 152a), une surface frontale crantée (146c), dirigée à peu près axialement vers l'axe d'élément de rotation (142a), avec au moins un cran de blocage (164b) et en ce que sur l'autre (152a) des deux éléments de rotation (146, 152a) est placée au moins une saillie d'encliquetage (164d) qui est précontrainte dans le sens de l'engagement dans le cran de blocage (164b).

5. Attelage de remorque selon la revendication 4, caractérisé en ce que la saillie d'encliquetage (164d) est placée de façon fixe sur l'autre (152a) des deux éléments de rotation (146a, 152a) et en ce que les deux éléments de rotation sont précontraints l'un par rapport à l'autre et de manière à pouvoir coulisser l'un par rapport à l'autre, dans la direction axiale de l'axe d'élément de rotation (142a).

6. Attelage de remorque selon l'une des revendications 1 à 5, caractérisé en ce que le levier de relevage (326) est disposé à peu près fixe en rotation sur un arbre d'actionnement (324) qui définit l'axe d'élément de rotation (324a), en ce que le levier de déclenchement (352a) est monté tournant sur cet arbre d'actionnement (324) et en ce que le dispositif d'entraînement en roue libre (364) est placé entre l'arbre d'actionnement (324) ou le levier de relevage (326) d'une part et le levier de déclenchement (352) d'autre part.

7. Attelage de remorque selon la revendication 6, caractérisé en ce que le dispostif d'entraînement en roue libre est placé entre un moyeu (326a) du levier de relevage (326) et un moyeu (352a) du levier de déclenchement (352).

8. Attelage de remorque selon la revendication 6 ou 7, caractérisé en ce que le dispositif de suppression de blocage (366) est commandé en fonction de la position du levier de relevage (326) ou de l'arbre d'actionnement (324).

9. Attelage de remorque selon la revendication 6 ou 7, caractérisé en ce que le dispositif de suppression de blocage (366) est commandé en fonction de la position du levier de déclenchement (352).

10. Attelage de remorque selon la revendication 6 ou 7, caractérisé en ce que le dispositif de suppression de blocage (466) est commandé en fonction d'une force agissant sur les moyens d'actionnement (442) dans le sens du passage du levier de relevage (26) de la position de blocage (fig. 1) à la position de maintien (fig. 3).

11. Attelage de remorque selon l'une des revendications 6 à 10, caractérisé en ce que le levier de relevage (326) et le boulon d'attelage (216) comportent chacun une surface à cran de maintien (343, 338) qui s'engagent l'une dans l'autre dans la position de maintien.

12. Attelage de remorque selon l'une des revendications 1 à 5, caractérisé en ce qu'un levier d'appui (46) est disposé de manière à ne pouvoir pratiquement pas tourner, sur un arbre d'actionnement (42) qui définit l'axe d'élément de rotation (42a) et en ce que le levier de déclenchement (52) est monté tournant sur cet arbre d'actionnement (42), en ce que le levier de relevage (26) est monté tournant autour d'un axe de levier de relevage (24a), parallèle à l'axe d'élément de rotation (42a), en ce que le levier d'appui (46) présente une pointe d'entraînement et une pointe d'appui (48) qui, pour faire passer le levier de relevage (26) de la position de blocage (fig. 1) à la position de maintien (fig. 3), glisse sur une arête d'entraînement (50) du levier de relevage (26) et, dans la position de maintien (fig. 3), s'engage dans un cran d'appui (49) du levier de relevage (26) et en ce que le dispositif d'entraînement en roue libre (64) est prévu entre le levier d'appui (52) ou l'arbre d'actionnement (42) d'une part et le levier de déclenchement (52) d'autre part.

13. Attelage de remorque selon la revendication 12, caractérisé en ce que le dispositif d'entraînement en roue libre (64) est prévu entre un moyeu (46a) du levier d'appui (46) et un moyeu (52a) du levier de déclenchement (52).

14. Attelage de remorqua selon la revendication 12 ou 13, caractérisé en ce que le dispositif de suppression de blocage (66) est commandé en fonction de la position du levier de relevage (26).

15. Attelage de remorque selon la revendication 12 ou 13, caractérisé en ce que le dispositif de suppression de blocage (166) est commandé en fonction de la position du levier d'appui (146).

16. Attelage de remorque selon la revendication 12 ou 13, caractérisé en ce que le dispositif de suppression de blocage (266) est commandé en fonction de la position du levier de déclenchement (252).

17. Attelage de remorque selon la revendication 12 ou 13, caractérisé en ce que le dispositif de suppression de blocage (466) est commandé en fonction d'une force agissant sur les moyens d'actionnement (444, 442), dans le sens du passage du levier de relevage (26) de la position de blocage (fig. 1) à la position de maintien (fig. 4).

18. Attelage de remorque selon l'une des revendications 1 à 17, caractérisé en ce -qu'un élément d'accouplement (26), commandant le dispositif de suppression de blocage (66) tournant autour de l'axe d'élément de rotation (42a) ou d'un axe (24a) parallèle au premier, porte une came de suppression de blocage (66b).

19. Attelage de remorque selon l'une des revendications 1 à 17, caractérisé en ce qu'un élément d'accouplement (146), commandant le dispositif de suppression de blocage (66) tournant autour de l'axe d'élément de rotation (142a) ou d'un axe parallèle au premier, porte un curseur de suppression de blocage (166h) coulissant a peu près parallèlement à l'axe d'élément de rotation (142a) et qui est en prise avec une piste à cames (146m), disposée sur le corps d'attelage (110).

20. Attelage de remorque selon l'une des revendications 1 à 17, caractérisé en ce qu'un élément d'accouplement (252), commandant le dispositif de suppression de blocage (266), tournant autour de l'axe d'élément de rotation (242a) ou d'un axe parallèle à celui-ci, est mobile en direction de l'axe (242a) respectif et peut coulisser, au cours d'une rotation autour de son axe (242a) respectif, en direction de l'axe (242a) respectif, par engagement avec une arête de guidage (266r), disposée sur le corps d'attelage (210).

21. Attelage de remorque selon la revendication 1, caractérisé en ce que le levier de déclenchement (252) traverse un perçage (211) pratiqué dans une branche (210a) du corps d'attelage (210) en forme de fourche, avec un jeu en rotation, et en ce que le bord de ce perçage est une arête de guidage (266r).

22. Attelage de remorque selon la revendication 21, caractérisé en ce que la section transversale du levier de déclenchement (252) est déviée dans la longueur et par rapport à un plan perpendiculaire à son axe de rotation, au droit du passage à travers le perçage (211).

23. Attelage de remorque selon l'une des revendications 2 à 17, caractérisé en ce que l'élément de rotation (446a), logeant le cran de blocage (464b), est formé par deux pièces d'élément de rotation (446aI, 446aII), mobiles angulairement l'une par rapport à l'autre dont chacune comporte une section de cran de blocage (464bI, 464bII), ces sections de cran de blocage (464bI, 464bII), dans une première position angulaire relative (fig. 13) des deux pièces d'élément de rotation (446rI, 446aII), se raccordant l'une à l'autre de manière à garantir à une lame de blocage qui leur est commune ou à une saillie de blocage (464d) qui leur est commune, l'engagement dans l'autre élément de rotation (452a) respectif et, dans une deuxième position angulaire relative (fig. 14) des deux pièces d'élément de rotation (446aI, 446aII), étant décalées l'une par rapport à l'autre de manière que leur lame de blocage ou leur saillie de blocage (464d) commune ne puisse s'engager dans aucune des sections de cran de blocage (464bI, 464bII).

24. Attelage de remorque selon la revendication 23, caractérisé en ce que l'une (446aI) des pièces d'élément de rotation est montée non tournante sur un arbre d'actionnement (442), faisant partie des moyens d'actionnement et l'autre (446aII) des deux pièces d'élément de rotation est montée, mobile angulairement de façon limitée, sur l'arbre d'actionnement (442), en ce qu'entre les deux pièces d'élément de rotation (446aI, 446aII) est placée une suspension de suppression de jeu (446aa) qui tend à faire tourner les deux pièces d'élément de rotation (446aI, 446aII) dans la première position angulaire relative (fig. 1) et en ce que l'autre (446aII) des deux pièces d'élément de rotation est soumise à un effet plus puissant des premiers moyens de suspension (P 428) que celui de la suspension de suppression de jeu (446aa), de manière que les deux pièces d'élément de rotation (446aI, 446aII) passent dans la deuxième position angulaire relative (fig. 14), lorsque l'arbre d'actionnement (442) reçoit un couple de rotation, dans le sens du passage du levier de relevage (26) de la position de blocage (fig. 1) à la position de maintien (fig. 4).

25. Attelage de remorque selon l'une des revendications 1 à 24, caractérisé en ce que les deux éléments de rotation (152a, 146a) tournant l'un par rapport à l'autre, présentent chacun un prolongement radial (152, 146) dont un (146) au moins est coudé dans un plan contenant l'axe d'élément de rotation (142a), de manière que les deux prolongements (152, 146) se situent à peu près dans un plan commun, normal à l'axe d'élément de rotation (142a).

26. Attelage de remorque selon l'une des revendications 5 à 25, caractérisé en ce que la saillie d'encliquetage (464d) et le cran de blocage (464b) présentent des détalonnages (464da, 464ba) qui empêchent que les deux éléments de rotation (446a, 452a) se détachent involontairement l'un de l'autre.

27. Attelage de remorque selon l'une des revendications 24 à 26, caractérisé en ce que le jeu angulaire existant pour faire passer les deux pièces d'élément de rotation (446aI, 446aII) de la première position angulaire relative (fig. 13) à la deuxième position angulaire relative (fig. 14), autorise une avance de l'arbre d'actionnement (442) avant le début du déplacement du levier de relevage de sa position de blocage (fig. 1) en direction de sa position de maintien (fig. 4) et en ce que cette avance sert à commander un élément de commande (474, 574) qui, en présence d'un appareil énergétique (572), pressant l'oeillet de traction (18) vers le boulon d'attelage (16), supprime la force de cet appareil énergétique (572), avant que le déplacement du levier de relevage (26) ne soit amorcé par l'arbre d'actionnement (442).

28. Attelage de remorque selon l'une des revendications 2, 3, 6, 7, 11, 12, 13 ou 25, caractérisé en ce qu'un élément de suppression de blocage (678) est monté tournant autour de l'axe d'élément de suppression de blocage (678) est précontraint en direction d'une position de suppression de blocage (figure 16, 17, 18, 19) dans laquelle il maintient la lame de blocage (675) en position de dégagement par rapport au cran de blocage (677), lorsque le levier de déclenchement (652) se trouve dans la zone de position de fonctionnement, pendant le passage du levier de relevage (626) de sa position de blocage (fig. 16) à sa position de maintien (fig. 18), en ce que sur l'élément de suppression de blocage (678) est placé un cran supplémentaire (678c) dans lequel la lame de blocage (675) tombe à peu près en même temps qu'elle tombe dans le cran de blocage (677) (fig. 19), lorsque le levier de déclenchement (652) passe de sa zone de position de fonctionnement (fig. 16 à 18) à sa position de préparation de déclenchement (fig. 19), alors que le levier de relevage (626) se trouve en position de maintien, de sorte que lors du retour suivant du levier de déclenchement (652), de la position de préparation de déclenchement (fig. 19) à la zone de position de fonctionnement (fig. 20), l'élément de suppression de blocage (678) est désengagé de sa position de suppression de blocage, à l'encontre de sa précontrainte (679) par la lame de blocage (675) et en ce que, pour replacer la lame de blocage (675) dans sa position de désengagement, il est prévu une came de rappel de lame de blocage (677b, 677c) qui, lors du retour du levier de relevage (626) de la position de maintien (fig. 19) à la position de blocage (675) dans sa position de désengagement (fig. 1), après que le levier de déclenchement (652) a été replacé en direction de sa zone de position de fonctionnement (fig. 1), de sorte qu'alors l'élément de suppression de blocage (678) peut passer à nouveau dans sa position de suppression de blocage (fig. 1), sous l'action de sa précontrainte (679).

29. Attelage de remorque selon l'une des revendications 4, 5, 6, 7, 11, 12, 13 ou 25, caractérisé en ce qu'un élément de suppression de blocage (778) est monté tournant autour de l'axe d'élément de rotation (742a) commun, en ce que cet élément de suppression de blocage (778) est précontraint en direction d'une position de suppression de blocage (figure 23), dans laquelle il maintient la saillie d'encliquetage (775) en position de désengagement, alors que le levier de déclenchement (752) se trouve dans la zone de position de fonctionnement, pendant le passage du levier de relevage de sa position de blocage à sa position de maintien, en ce qu'il est prévu sur l'élément de suppression de blocage (778) un cran supplémentaire (778c) dans lequel la saillie d'encliquetage (775) tombe à peu près en même temps que dans le cran de blocage (777), lorsque le levier de déclenchement (752) passe de sa zone de position de fonctionnement à sa position de préparation de déclenchement, alors que le levier de relevage se trouve en position de maintien, de sorte que lors du retour suivant du levier de déclenchement (752), de la position de préparation de déclenchement à la zone de position de fonctionnement, l'élément de suppression de blocage (778) est désengagé de la position de suppression de blocage, à l'encontre de sa précontrainte (779) par la saillie d'encliquetage (775) et en ce qu'il est prévu, pour le retour de la saillie d'encliquetage (775) dans sa position de désengagement, une surface de retour de saillie d'encliquetage (777b) qui, lors du retour du levier de relevage de la position de maintien à la position de blocage, est activée et rappelle la saillie d'encliquetage (775) dans la position de désengagement, après que levier de déclenchement (752) a été rappelé en direction de sa zone de position de fonctionnement, de sorte que l'élément de suppression de blocage (778) peut passer à nouveau dans sa position de suppression de blocage, sous l'effet de sa précontrainte (779).

# Fig.1

# Fig.2

# Fig.3

# Fig. 4

# Fig.5

# Fig. 6

# Fig.7

# Fig.8

## Fig.9

# Fig.10

# Fig.11   Ablauf des Zyklus – Öffnen mit eingekuppelter Zugöse und schließen durch einfahrende Zugöse

(1) = Fig.1

(2) = Zwischenstellung zwischen Fig.1 und Fig.2, wenn Auslösehebel gerade zum Anschlag an die Zugöse gekommen ist;

(3) = Fig.2

(4) = Fig.3

(5) = Zwischenstellung zwischen Fig.3 und Fig.4, wenn Sperrklinke Sperrast überfährt

(6) = Fig.4

(7) = Fig.5

(8) = Zwischenstellung zwischen Fig.5 und Fig.1, nachdem Abstütz-hebel aus Aufwerfhebel ausgeklinkt ist;

(9) = weitere Zwischenstellung zwischen Fig.5 und Fig.1, nachdem Abstütz-hebelanschlag gerade am Auslösehebel zur Anlage gekommen ist;

(10) = Fig.1

Fig.12

Fig.12a

# Fig.13

# Fig.14

# Fig.15

Fig. 16

EP 0 315 731 B1

Fig. 17

622
628
644
626
624
646a
640 638 630
650
648 649 679
636 678
646 642 677a
677c 678c 678 677b
675a 678b
634 678d
610a 675
610 612 676
616 654
652
620 610
618 657
658

39

Fig. 18

Fig. 19

# Fig. 20

# Fig. 21

626
624
622
652a
678

XXII          XXII

642

646a

664

675          676

652

# Fig. 22

679          678

622
652a

642

646a

646

# Fig. 23